(19) Europäisches Patentamt
European Patent Office
Office européen des brevets

(11) **EP 4 016 716 B1**

(12) **EUROPÄISCHE PATENTSCHRIFT**

(45) Veröffentlichungstag und Bekanntmachung des Hinweises auf die Patenterteilung:
**22.01.2025   Patentblatt 2025/04**

(21) Anmeldenummer: **20020637.3**

(22) Anmeldetag: **21.12.2020**

(51) Internationale Patentklassifikation (IPC):
**H01M 50/213** *(2021.01)*   **H01M 50/269** *(2021.01)*
**H01M 50/284** *(2021.01)*   **H01R 29/00** *(2006.01)*

(52) Gemeinsame Patentklassifikation (CPC):
**H01M 50/213; H01M 50/269; H01M 50/284;**
H01M 6/5011; H01M 10/4207; H01M 10/425;
Y02E 60/10

(54) **MONTAGEVORRICHTUNG FÜR EINE VERBUNDBATTERIE**

MOUNTING DEVICE FOR A COMPOSITE BATTERY

DISPOSITIF DE MONTAGE POUR UNE BATTERIE COMPOSITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.06.2022   Patentblatt 2022/25**

(73) Patentinhaber: **Weiland, Maximilian**
**29614 Soltau (DE)**

(72) Erfinder: **Weiland, Maximilian**
**29614 Soltau (DE)**

(74) Vertreter: **Bühler, Karl**
**Clemensstraße 120**
**80796 München (DE)**

(56) Entgegenhaltungen:
**EP-A1- 2 535 789      EP-A1- 3 270 437**
**EP-A1- 3 531 469      DE-A1- 102016 122 577**
**US-A1- 2019 259 984      US-A1- 2020 313 125**

**Beschreibung**

Die Erfindung betrifft eine Montagevorrichtung für eine Verbundbatterie zum Bereitstellen von unterschiedlichen Spannungen und Strömen für einen Verbraucher aus wenigstens einer Batteriezelle, eine Verbundbatterie mit der Montagevorrichtung sowie einen Akkupack mit entsprechenden Verbundbatterien.

Batteriezellen oder Batterien, ob in den verschiedenen handelsüblichen, nicht wieder aufladbaren Formen als Primärzellen oder ob in einer der meist gerätespezifisch konfigurierten, wieder aufladbaren Form als Akkumulatoren bzw. Sekundärzellen, ermöglichen insbesondere eine netzunabhängige Bereitstellung von elektrischer Energie wo immer diese benötigt wird und mithin einen ortsunabhängigen Betrieb von elektrischen Geräten vom Mobiltelefon bis zum elektrisch angetriebenen Fahrzeug.

Mit der Breite des Anwendungsbereichs von Batteriezellen einher gehen unterschiedlichste Anforderungen, insbesondere hinsichtlich Leistung, Energiegehalt, Form und Größe, denen jeder im Einzelnen verwendete Energiespeicher zu genügen hat, wobei alle handelsüblichen Batteriezellen im Hinblick auf ihre maßgeblichen Kenngrößen in genormter Form erhältlich sind.

Eine Verbundbatterie umfasst in der Regel mehrere einzelne genormte Batteriezellen, beispielsweise in Form von einzelnen Lithium-Rundzellen des Norm-Typs 18650 und kann insoweit durch Anzahl und Verschaltung derselben in spezifischer Weise für eine bestimme Anwendung bezüglich Spannung, Leistung und Formgebung konfiguriert werden.

Um eine zuverlässige Bereitstellung von elektrischer Energie mit Verbundbatterien zu gewährleisten, ist es insbesondere bei wieder aufladbaren Batterien bzw. Akkumulatoren oder Akkupacks erforderlich, Vorkehrungen gegen eine Tiefentladung und Überladung zu treffen, aber auch die Strombelastung jeder Zelle zu begrenzen. Dazu kommen einerseits Schutzeinrichtungen auf Zellebene und andererseits Sicherheitseinrichtungen zur Funktionsüberwachung aller, in einer Verbundbatterie zusammengefassten Einzelzellen zur Anwendung.

Als solche werden auf Zellebene insbesondere Überdrucksicherungen, etwa in Form von Sollbruchstellen innerhalb des Zellbechers, verbaut, die sich ab einem vorgegebenen Zelleninnendruck selbsttätig irreversibel öffnen und damit eine weitergehende Zerstörung einer Batteriezelle verhindern. Zur Funktionsüberwachung einer Verbundbatterie werden demgegenüber elektronische Schutzschaltungen eingesetzt. Diese ermöglichen es zum einen, die Verbundsspannung und Spannungsunterschiede zwischen den einzelnen Batteriezellen zu überwachen und beim Auftreten von unzulässig hohen Strömen den betreffenden Strompfad elektronisch zu unterbrechen. Darüber hinaus, oder zusätzlich, können in einer Verbundbatterie auch Thermosensoren zum individuellen Erfassen der Temperatur jeder Einzelzelle oder zur gemeinsamen Temperaturerfassung mehrerer Zellen gleichzeitig vorgesehen sein, die jeweils mit der elektronischen Schutzschaltung zusammenwirken, um wiederum den Stromfluss aus der Verbundbatterie zu unterbrechen, so dass ein Überhitzen der Verbundbatterie und deren Zerstörung noch zuverlässiger verhindert werden können. Sicherheitseinrichtungen der genannten Art sind daher genauso wesentlich für die Funktionssicherheit einer Verbundbatterie wie für eine gefahrlose Nutzung jeder damit betriebenen technischen Vorrichtung.

Entsprechend werden im freien Verkauf fertig konfektionierte Verbundbatterien mit Schutzelektronik, Temperaturüberwachung, Kühlung und Überstromsicherungen, etwa für die Verwendung in Kraftfahrzeugen, angeboten, bei denen die Zellen mittels Punktschweißen fest miteinander verbunden sind und bei denen ein Austausch defekter Batteriezellen auch aus Sicherheitsgründen weder vorgesehen noch ohne Weiteres für einen Endanwender möglich ist. Verbundbatterien, wie sie beispielsweise in Powertools verwendet werden, weisen hingegen zumeist keine Sicherung auf Zellebene auf.

Allerdings haben derart vorkonfektionierte Verbundbatterien auch Nachteile. So ist es insbesondere von Nachteil im Hinblick auf Anschaffungs- und Betriebskosten solcher Verbundbatterien, dass schon eine einzige defekte Zelle im Falle von in Serie geschalteten Zellen oder eine defekte Temperaturüberwachung zum Ausfall des gesamten Zellverbunds, bzw. eines Akkupacks, führen kann, ohne, dass es einem Endanwender bzw. Benutzer möglich wäre, die defekte Zelle in adäquater Weise zu ersetzen oder die noch intakten Zellen aus der Verbundbatterie, bzw. dem Akkupack, eines insoweit defekten Gerätes, wie etwa einem Akkuschrauber, Laptop, Pedelec oder Akku-Rasenmäher, weiterzuverwenden. Hinzu kommt, dass in vielen Verbundbatterien bzw. Akkupacks die einzelnen Zellen in einer Kunststoffmatrix vergossen sind, so dass ein Austausch einer Einzelzelle ohne eine Zerstörung der Verbundbatterie bzw. des Akkupacks nicht möglich ist. Auch ist es in vielen Fällen nicht möglich, die Schutzelektronik nach einem einmaligen Spannungsverlust in nur einer Serienstufe weiterzuverwenden, da diese irreversibel abgeschaltet wird.

Dass wegen der mangelnden Reparaturmöglichkeit eine womöglich ansonsten voll funktionsfähige Verbundbatterie lediglich noch aufwendig entsorgt werden kann, ist zweifellos von Nachteil auch im Hinblick auf den Umweltschutz.

Es besteht daher ein Bedarf an Verbundbatterien bzw. Akkupacks, die einen Austausch defekter Batteriezellen auf einfache, kostengünstige und, vor allem, sichere Weise durch den Endanwender selbst ermöglichen. Darüber hinaus ist es aus Umweltgründen, neben einer Reparaturmöglichkeit, wünschenswert, die in einer Verbundbatterie, bzw. einem Akkupack, nach einem Zelldefekt intakt gebliebenen Einzelzellen in neu, vom Endanwender selbst zu konfigurierenden Verbundbatterien oder Akkupacks weiterzuverwenden, und zwar ohne besonderen apparativen Aufwand und ohne Einschränkungen bei der Betriebssicherheit.

Um die von einer Verbundbatterie bereitzustellende elektrische Energie weitestgehend an den jeweiligen Bedarf einer damit zu betreibenden Vorrichtung anzupassen, ist es zudem erforderlich, die einzelnen Batteriezellen sowohl in Reihenschaltung wie in Parallelschaltung verwenden zu können.

Ein Beispiel einer Verbundbatterie mit Sekundärzellen, bei der diese mittels einer Steuerelektronik und konventionellen mechanischen Relais oder Halbleiterschaltern abwechselnd in einer Serienschaltung und einer Reihenschaltung betrieben werden, ist aus US 2008/0054870 A1 bekannt (Basis für den Oberbegriff des Anspruchs 1).

DE 10 2018 009 445 A1 offenbart Batterie-Packs für mobile oder stationäre Anwendungen, bei denen Rundzellen in Steckmodulen in Form einer selbsttragenden Haltematrix aus Kunststoff angeordnet sind und mittels Löten an Kontaktblechen oder, alternativ, mittels Punkt-, Laser- oder Ultraschallschweißen parallel und/oder in Reihe zusammenschaltbar sind.

Eine Überstromsicherung auf Zellebene in Form eines punktverschweißten Verbindungsdrahts am Pluspol einer Einzelzelle, der so dimensioniert ist, dass er durch einen erhöhten Stromfluss im Falle eines Kurzschlusses innerhalb der Zelle thermisch zerstört wird, und damit eine Entladung parallel geschalteter Zellen verhindert, beschreibt EP2416405A1.

Somit ist es auf der Grundlage des Standes der Technik zwar möglich, Rundzellen in Kunststoff-Steckmodulen in flexibler Weise in einer Verbundbatterie bzw. Akkupack anzuordnen, die einzelnen Batteriezellen in einer Serien- oder Reihenschaltung elektrisch zu kontaktieren, wobei diese Kontaktierung entweder nicht lösbar, in Form von Schweiß- oder Lötverbindungen, oder gesteuert, mittels mechanischen Relais oder Halbleiterschaltern, erfolgen kann, und zudem einen weitestgehend sicheren Betrieb einer derartigen Verbundbatterie durch die Verwendung von Schmelzsicherungen und elektronischen Schutzschaltungen zu gewährleisten.

Nicht möglich ist es jedoch einem Endanwender, defekte Batteriezellen einer derartigen Verbundbatterie auf einfache, kostengünstige und sichere Weise zu ersetzen, wie auch bereits benutzte, noch funktionsfähige Einzelzellen auf genauso einfache, kostengünstige und sichere Weise für neue Anwendungen bezüglich Spannung, Leistung und Formgebung neu zu konfigurieren.

Aus EP 2 535 789 A1 ist eine Computer-Maus mit mehreren Batteriezellen und einer Schalteinrichtung für ein wahlweises Verbinden der Batteriezellen in Serien- oder Reihenschaltung zur Verlängerung der Batterielebensdauer und Leistungsanpassung bekannt.

Mit der vorliegenden Erfindung soll eine Montagevorrichtung für eine Verbundbatterie zum Bereitstellen von unterschiedlichen Spannungen und Strömen für einen Verbraucher bereitgestellt werden, die geeignet ist, die Nachteile des Standes der Technik zu überwinden und die es einem Endanwender ermöglicht, eine Verbundbatterie oder einen Akkupack bedarfsgerecht auf einfache, kostengünstige und sichere Weise, auch unter Verwendung noch funktionsfähiger, gebrauchter Batteriezellen, selbst herzustellen.

Die erfindungsgemäße Aufgabe wird durch die Gegenstände der unabhängigen Patentansprüche gelöst. Bevorzugte Weiterbildungen sind Gegenstand der Unteransprüche.

Ein erster Aspekt der vorliegenden Erfindung betrifft eine Montagevorrichtung für eine Verbundbatterie zum Bereitstellen von unterschiedlichen Spannungen und Strömen für einen Verbraucher aus wenigstens einer Batteriezelle, insbesondere wenigstens einer Rundzelle eines Akkumulators, mit elektrischen Kontakten in Form eines Pluspols und eines Minuspols zur Entnahme der gespeicherten elektrischen Energie. Die erfindungsgemäße Montagevorrichtung umfasst eine Platine mit elektrischen Leitungen bzw. Leiterbahnen und mit Schalterelementen zum elektrischen Verbinden der wenigstens einen Batteriezelle mit dem Verbraucher sowie einer Sicherheitseinrichtung zur Funktionsüberwachung der wenigstens einen Batteriezelle.

Weiter umfasst die Montagevorrichtung ein Gehäuse zur Aufnahme einer Mehrzahl von Batteriezellen. Das Gehäuse ist zweiteilig, mit einem ersten Gehäuseteil und einem zweiten Gehäuseteil, zum lösbaren Umschließen der Batteriezellen ausgebildet. Entsprechend der in dem Gehäuse aufzunehmenden Anzahl von Batteriezellen, weisen das erste Gehäuseteil und das zweite Gehäuseteil jeweils eine Mehrzahl von Kontaktbereichen auf, die so in den beiden Gehäuseteilen angeordnet sind, dass jede in dem Gehäuse aufzunehmende Batteriezelle das erste und das zweite Gehäuseteil in jeweils einem Kontaktbereich berührt und dazwischen fixierbar ist.

Um ein sicheres Halten der Batteriezellen in dem Gehäuse zu ermöglichen, ist jeder Kontaktbereich des ersten oder zweiten Gehäuseteils als Einfassung zur Aufnahme jeweils einer Batteriezelle ausgebildet. Jede dieser Einfassungen ist so gestaltet, dass sie eine darin aufgenommene Batteriezelle zumindest teilweise umschließt. Um eine noch weitergehende Positionssicherung der Batteriezellen in dem Gehäuse zu ermöglichen, sind alternativ alle Kontaktbereiche des ersten und des zweiten Gehäuseteils in entsprechender Weise als Einfassungen ausgebildet. Jede dieser Einfassungen ist zudem so ausgebildet, dass sie mit eingesetzter Batteriezelle von einer Aussparung in der Platine aufgenommen werden kann. Diese Aussparungen oder Ausfräsungen in der Platine können beispielsweise rechteckig geformt sein, sodass sie die Aufnahme jeweils einer Rundzelle ermöglichen.

Um die auf dieses Weise in den Aussparungen der Platine zu haltenden Batteriezellen elektrisch mit der Platine zu verbinden, weist jede Aussparung eine erste und zweite Kontaktfläche auf. Die erste Kontaktfläche ist dabei zum elektrischen Verbinden eines Pluspols der Batteriezelle und die zweite Kontaktfläche zum elektrischen Verbinden eines Minuspols der Batteriezelle mit den elektrischen Leitungen bzw. Leiterbahnen der Platine vorgesehen. Die Verbindungen zwischen den Kontaktflächen der Platine und den Batteriezellen sind elektromechanisch lösbar ausgebildet.

Die erfindungsgemäße Montagevorrichtung stellt somit eine lösbar kraftschlüssige Halterung für die aufzunehmenden Batteriezellen in der Platine bereit, die sich auf besonders vorteilhafte Weise von einer gewöhnlichen Zellanordnung auf der Platine unterscheidet, indem sie nicht nur eine zuverlässigere Positionsstabilisierung jeder einzelnen Batteriezelle ermöglicht, sondern darüber hinaus auch eine kompaktere Bauweise einer damit konfigurierten Verbundbatterie. Die Platine der erfindungsgemäßen Montagevorrichtung kann damit grundsätzlich an die unterschiedlichsten Zellenformen, bzw. Zellformate oder Formfaktoren, und Zellenspannungen oder Verbundspannungen sowie Ausgangsströme angepasst werden, so dass sie auch als Universalplatine bezeichnet werden kann.

Die Sicherheitseinrichtung umfasst für jede der Batteriezellen eine Sicherungsvorrichtung als elektrische Überstromsicherung, über die jeweils bevorzugt, im Hinblick auf ein platzsparendes Platinen-Layout, die erste Kontaktfläche an die Leitungen der Platine angeschlossen ist. Die Sicherungsvorrichtung stellt somit einen Schutz vor thermischer Zerstörung auf Zellebene dar, wie sie insbesondere als Folge einer zu schnellen Ladung und Entladung oder der Beschädigung des Separators nach der Tiefentladung einer Batteriezelle auftreten kann, und verhindert ein unerwartetes Abbrennen einer Batteriezelle.

Ein zweiter Aspekt der vorliegenden Erfindung betrifft eine Verbundbatterie zum Bereitstellen von elektrischer Energie für einen Verbraucher. Diese umfasst wenigstens eine Batteriezelle mit elektrischen Kontakten zur Entnahme der gespeicherten elektrischen Energie und die erfindungsgemäße Montagevorrichtung zum Bereitstellen von unterschiedlichen Spannungen und Strömen für einen Verbraucher aus der wenigstens einen Batteriezelle. Als Batteriezellen sind bevorzugt Sekundärzellen in Form von wieder aufladbaren Rundzellen bzw. Akku-Zellen, insbesondere Lithiumionen-Rundzellen, vorgesehen, wie sie beispielsweise unter den Typenbezeichnungen 18650 und 21700 erhältlich sind. Mit der Verwendbarkeit derartiger Sekundärbatterien eignet sich die erfindungsgemäße Montagevorrichtung zur Bereitstellung von elektrischer Energie für nahezu alle stationären und mobilen Verbraucher. Durch die Konfiguration der Verbundbatterie mit der erfindungsgemäßen Montagevorrichtung erhält der Endanwender die Möglichkeit, eine sichere Verbundbatterie mit Batteriezellen seiner Wahl sicher zusammenzustellen. Auf ebenso sichere wie einfache Weise ist es dem Endanwender auch möglich, einzelne fehlerhafte oder verbrauchte Zellen der Verbundbatterie zu ersetzen. Die erfindungsgemäß konfigurierte Verbundbatterie zeichnet sich damit auch durch ihre Wiederverwendbarkeit aus.

Ein weiterer Aspekt der vorliegenden Erfindung betrifft einen Akkupack zum Bereitstellen von elektrischer Energie für einen Verbraucher mit mehreren der erfindungsgemäßen Verbundbatterien. Der Akkupack weist durch die Konfiguration der verwendeten Verbundbatterien mit den erfindungsgemäßen Montagevorrichtungen alle vorstehend genannten Vorteile der Montagevorrichtung bzw. Verbundbatterie auf und zeichnet sich somit insbesondere durch seine sichere und einfache Konfigurierbarkeit in puncto Leistung, Spannung und Formgebung ohne besonderen Werkzeugeinsatz durch den Endanwender aus. Durch die Möglichkeit, jederzeit defekte oder verbrauchte Einzelzellen auf einfache und sichere Weise, bei gleichbleibend hoher Betriebssicherheit, auszutauschen, ist der Akkupack vor allem auch für vielfältige Verwendungen im Consumer-Bereich geeignet. Dass der Endanwender damit auch die Möglichkeit hat, bereits gebrauchte Zellen anderer Akkupacks, etwa aus defekten Geräten, wiederzuverwenden, ist nicht nur aus Kostengründen, sondern genauso aus Umweltgründen vorteilhaft.

Der erfindungsgemäße Akkupack umfasst eine Mehrzahl der Verbundbatterien. Die einzelnen Verbundbatterien des Akkupacks sind jeweils über ihre erste und zweite Anschlussbuchse untereinander in Serienschaltung oder Parallelschaltung in elektromechanisch lösbarer Weise zu verbinden. Dazu sind elektrisch leitende Anschlusselemente vorgesehen, von denen jedes jeweils einer ersten oder einer zweiten Anschlussbuchse einer Verbundbatterie verbindbar ist. Die Bereitstellung der elektrischen Energie des Akkupacks für einen Verbraucher erfolgt über eine der ersten und zweiten Anschlussbuchsen, der mittels den Anschlusselementen verschalteten Verbundbatterien. Die dritten Anschlussbuchsen der Verbundbatterien des Akkupacks dienen dessen Funktionsüberwachung sowie zum Spannungsausgleich zwischen den einzelnen Verbundbatterien. Für eine dazu erforderliche elektromechanische Verbindung zwischen den einzelnen dritten Anschlussbuchsen ist ein Leitungselement vorgesehen, das bevorzugt als Flachbandkabel mit Steckern, entsprechend den dritten Anschlussbuchsen, ausgebildet ist.

Die Verbundbatterien des Akkupacks sind mechanisch über die in jeder Verbundbatterie vorgesehenen ersten Befestigungselemente, die bevorzugt in Form von Bohrungen im Randbereich des Gehäuses jeder Montagevorrichtung vorgesehen sind, lösbar untereinander befestigt. Als erste Verbindungselemente kommen hierbei bevorzugt Gewindestangen mit Muttern zur Anwendung. Mittels der zweiten Befestigungselemente, die wiederum bevorzugt im Randbereich jeder Verbundbatterie vorgesehen und als Sackbohrungen ausgebildet sind, und zweiten Verbindungselementen, werden die Verbundbatterien des Akkupacks lösbar in vertikal oder horizontal gestapelter Zuordnung gehalten, unabhängig davon, ob sich dabei die benachbarten Verbundbatterien mit dem ersten und zweiten Gehäuseteil gegenüberliegen oder ob eine der benachbarten Verbundbatterien der anderen um 180° um ihre Längsachse gedreht zugeordnet ist, so dass die beiden Verbundbatterien sich einander also mit dem jeweils ersten oder zweiten Gehäuseteil gegenüberliegen. Die zweiten Verbindungselemente sind hierzu bevorzugt in Form von Stiften ausgebildet. Durch eine Anordnung der ersten und der zweiten Befestigungselemente im Randbereich des Gehäuses jeder Montagevorrichtung orthogonal und parallel zur Platine ist sichergestellt, dass die einzelnen Verbundbatterien des Akkupacks mittels den zweiten Verbindungselementen in einer gewünschten vertikalen und/oder lateralen Anordnung zueinander gehalten werden und, dass mittels der ersten Verbindungselemente, eine zuverlässige kraftschlüssige Verbindung aller Verbundbatterien des Akkupacks untereinander auf lösbare Weise gewährleistet ist.

Der erfindungsgemäße Akkupack ist somit modular aufgebaut und entsprechend der Anzahl der umfassten Verbundbatterien bzw. Montagevorrichtungen variabel in Form und Größe gestaltbar. Von besonderem Vorteil ist dabei nicht nur, dass der Akkupack nahezu beliebig in seiner äußeren Erscheinung an vorgegebene räumliche Gegebenheiten anpassbar ist, sondern auch, dass er in nahezu jeder Position mittels der ersten Befestigungselemente und ersten Verbindungselemente zuverlässig in lösbarer Weise entsprechend zu befestigen ist.

Bevorzugte Ausgestaltungen der Erfindung ergeben sich aus den übrigen, in den Unteransprüchen genannten Merkmalen.

So ist es bevorzugt, die erste und zweite Kontaktfläche in jeder der Aussparungen der Platine der erfindungsgemäßen Montagevorrichtung jeweils in Form einer metallischen Kontaktfeder zum elektrischen Verbinden mit den Kontakten einer Batteriezelle vorzusehen. Die erfindungsgemäß ausgebildeten Kontaktflächen ermöglichen es, eine Batteriezelle sicher und lösbar in der Montageeinrichtung durch einfaches Einsetzen und Herausnehmen der Zellen elektrisch zu kontaktieren, und ohne Gefahr einer Temperaturschädigung, wie sie bei konventionell aufgebauten Verbundbatterien und Akkus infolge der bei der Kontaktierung der Einzelzellen angewandten Schweiß- oder Lötverfahren auftreten kann.

Die als Überstromschutz für jede Batteriezelle vorgesehene Sicherungsvorrichtung der Montagevorrichtung ist bevorzugt in Form einer elektrischen Stecksicherung ausgebildet, die lösbar über eine Buchse mit den Leiterbahnen der Platine elektrisch verbunden ist. Die Buchse ist hierbei nicht lösbar, insbesondere durch eine Niet- oder Schraubverbindung, mit den Leitungen der Platine elektrisch verbunden. Durch die erfindungsgemäße Stecksicherung ist sichergestellt, dass im Falle eines Kurzschlusses in einer Batteriezelle, etwa durch einen beschädigten Separator, keine Entladung der im Parallelverbund geschalteten Zellen über die beschädigte Zelle erfolgen kann und damit ein Abbrand der beschädigten Zelle oder des Zellverbunds verhindert wird. Die bevorzugte Art der Befestigung der Buchsen auf der Platine stellt insbesondere sicher, dass sich diese auch beim Defekt einer damit verbundenen Batteriezelle infolge der dabei auftretenden hohen Temperaturen, anders als gelötete Buchsen, nicht von der Platine lösen können. Eine mit der erfindungsgemäßen Montageeinrichtung konfigurierte Verbundbatterie weist damit gegenüber bekannten Verbundbatterien oder Akkupacks erhebliche Sicherheitsvorteile auf.

Die Sicherungsvorrichtungen der Montagevorrichtung lassen sich insbesondere an Batteriezellen mit unterschiedlichen Leistungsdichten anpassen und sind damit auch für eine Verwendung von Lithium-Zellen mit sehr geringem Innenwiderstand ausgelegt. Mit der erfindungsgemäße Montagevorrichtung lassen sich somit auch besonders leistungsstarke Verbundbatterien konfigurieren, wie sie beispielsweise für Akkuschrauber benötigt werden. Da Einbau und Austausch der bevorzugten Sicherungsvorrichtungen ohne Spezialequipment jeglicher Art möglich sind, zeichnet sich die erfindungsgemäße Montagevorrichtung zudem durch eine besondere Servicefreundlichkeit bzw. Nutzerfreundlichkeit aus. Als Stecksicherungen werden bevorzugt handelsübliche Ausführungen vom Typ "Mini" aus dem Kfz-Bereich verwendet, die für unterschiedlichste Maximalstromwerte angeboten werden und sich darüber hinaus durch ihre hohe Verfügbarkeit auszeichnen.

Die einzelnen Sicherungsvorrichtungen zur Funktionssicherung auf Zellebene bzw. Stecksicherungen sind vorzugsweise jeweils im Bereich des Pluspols einer eingesetzten Batteriezelle angeordnet. Die Stecksicherungen sind dabei bevorzugt liegend, mithin in ihrer Längsrichtung parallel zur Oberfläche der Platine angeordnet. Diese Anordnung hat den Vorteil, dass eine visuelle Überprüfung des Zustands jeder einzelnen Stecksicherung der Montagevorrichtung ohne Lösen der Steckverbindungen, also bereits mit einem Blick auf die Montagevorrichtung möglich ist, was wiederum zu der besonderen Servicefreundlichkeit bzw. Nutzerfreundlichkeit der erfindungsgemäßen Montagevorrichtung beiträgt. Durch die geringere Bauhöhe der liegenden Anordnung der Stecksicherungen reduziert sich zudem der Platzbedarf der Montagevorrichtung und mithin einer damit konfigurierten Verbundbatterie in vorteilhafter Weise. Die Trennungsmöglichkeit zwischen den Leistungsleitungen auf der Platine und dem Pluspol einer in der erfindungsgemäßen Montagevorrichtung eingesetzten Batteriezelle in Form einer seriell dazwischen angeordneten, separaten Schaltungskomponente für die Funktionssicherung auf Zellenebene, ermöglicht, im Gegensatz zu den aus dem Stand der Technik bekannten Vorrichtungen, insbesondere eine gute Zugänglichkeit und Austauschbarkeit der Sicherungsvorrichtung.

Neben einer Sicherungsvorrichtung für jede Batteriezelle weist die Sicherheitseinrichtung der erfindungsgemäßen Montagevorrichtung eine Schutzelektronik zur Vermeidung einer Tiefentladung und Überladung jeder Batteriezelle auf. Vorteilhafterweise umfasst die Schutzelektronik hierzu einen Spannungsausgleichsregler eines Batteriemanagementsystems. Alternativ dazu, oder in Kombination damit, weist die Sicherheitseinrichtung eine Temperaturüberwachung mit Temperatursensoren auf, um die Temperatur jeder oder einzelner Batteriezellen der Verbundbatterie im Betrieb zu überwachen. Vorzugsweise ist dazu jeder Aussparung in der Platine der Montagevorrichtung ein Temperatursensor zugeordnet, um die Betriebssicherheit einer damit konfigurierten Verbundbatterie weiter zu erhöhen. Besonders bevorzugt ist eine Anordnung der Sicherheitseinrichtung direkt auf der Platine der Montagevorrichtung in elektrischer Verbindung mit den dafür vorgesehenen Leiterbahnen, wodurch die Funktionssicherheit einer mit der erfindungsgemäßen Montagevorrichtung konfigurierten Verbundbatterie auf besonders nutzerfreundliche Weise und ohne zusätzlichen Schaltungsaufwand gewährleistet wird.

Die elektrischen Leitungen bzw. Leiterbahnen der Platine der erfindungsgemäßen Montagevorrichtung sind bevorzugt, je nach der zu übertragenden elektrischen Leistung, als Leistungsleitungen mit einem größeren oder als Steuerleitungen mit einem kleineren Querschnitt ausgebildet. Der Signalfluss über die Steuerleitungen dient bevorzugt der Funktions- und Temperaturüberwachung der Batteriezellen sowie dem Spannungsausgleich zwischen diesen. Die Leistungsleitungen umfassen erste Leistungsleitungen für eine Serienschaltung der Batteriezellen und zweite Leistungsleitungen für eine Parallelschaltung der Batteriezellen. Über die erste Sammelschiene ist jede erste und zweite Leistungsleitung, die mit einem Pluspol einer Batteriezelle verbunden ist, bzw. jede erste und zweite Leistungsleitung, die mit einem Minuspol einer Batteriezelle verbunden ist, mit dem entsprechenden Anschluss des Verbrauchers elektrisch verbindbar. Die Sammelschienen sind bevorzugt an zwei gegenüberliegenden Längsseiten einer Großfläche der Platine der Montagevorrichtung angeordnet. Die erfindungsgemäße Montagevorrichtung ermöglicht somit die Bereitstellung einer Verbundbatterie, deren einzelne Batteriezellen unter Einhaltung hoher Sicherheitsanforderungen flexibel konfigurierbar sind, ohne den dafür üblicherweise erforderlichen enormen Verkabelungsaufwand innerhalb der Verbundbatterie. Verbundbatterien und Akkupacks mit der erfindungsgemäßen Montagevorrichtung sind gegenüber konventionell aufgebauten Verbundbatterien und Akkupacks daher nicht nur einfacher, sondern auch schneller zu konfigurieren, was sich unmittelbar vorteilhaft auf die Herstellkosten auswirkt.

Besonders bevorzugt ist es, die Leistungsleitungen in Form der jeweils ersten und zweiten Leistungsleitungen und Sammelschienen auf einer ersten Großfläche der Platine und die Steuerleitungen auf einer zweiten Großfläche derselben vorzusehen. Mit anderen Worten: Die Leistungsleitungen und die Steuerleitungen der erfindungsgemäßen Montagevorrichtung sind bevorzugt auf zwei gegenüberliegenden Seiten der Platine, bzw. deren Oberseite und Unterseite, angeordnet. Dies ermöglicht nicht nur eine weitgehende elektromagnetische, sondern auch eine für einen Nutzer sofort erkennbare Entkopplung zwischen den beiden Leitungsarten und mithin eine einfachere Konfiguration und einen störungsfreieren Betrieb einer Verbundbatterie.

Die Schaltelemente zum wahlweisen Öffnen und Schließen einer elektrischen Verbindung zwischen einer Batteriezelle und den ersten oder den zweiten Leistungsleitungen sind in vorteilhafter Weise an Knotenpunkten der elektrischen Leitungen bzw. Leiterbahnen der Platine der erfindungsgemäßen Montagevorrichtung vorgesehen. Die Knotenpunkte dienen damit der Auswahl einer Schaltungsvariante, in der die einzelnen Batteriezellen der mit der erfindungsgemäßen Montagevorrichtung konfigurierten Verbundbatterie betreibbar ist, bzw. der Festlegung der verschiedenen Serien- und Parallelkonfigurationen derselben. Als Schaltelemente zum elektrischen Verbinden der Batteriezellen in der Serienschaltung und der Parallelschaltung kommen in der Montagevorrichtung bevorzugt Einschalter und Wechselschalter zur Anwendung in Form von elektromechanischen Schaltern wie Steckbrücken mit Steckbuchsen, Lotbrücken, Relais und/oder elektronischen Schaltern.

Besonders bevorzugte Einschalter sind Steckbrücken mit Steckbuchsen zum Herstellen einer lösbaren elektrischen Verbindung oder Lotbrücken zum Herstellen einer nicht lösbaren elektrischen Verbindung. Die mit den Steckbrücken verwendeten Steckbuchsen sind jeweils fest mit den elektrischen Leitungen der Platine verbunden. Im Hinblick auf einen geringen Übergangswiderstand ist es von Vorteil, die Steckbuchsen an den einzelnen Knotenpunkt mit Mehrfachkontakten für jede Schaltungsalternative auszubilden und die elektrische Verbindung jeweils über Steckbrücken mit korrespondierenden Mehrfachkontakten herzustellen.

Beispielsweises kann eine Steckbrücke mit vier Kontakten in linearer Anordnung vorgesehen sein, mit der jeweils zwei von drei Leitungen auf der Platine über zwei entsprechend beabstandete Steckbuchsenkontakte an den Leitungsenden verbunden werden können, um die erfindungsgemäße Montagevorrichtung für eine Serien- oder Parallelschaltung der aufzunehmenden Batteriezellen vorzubereiten. Über das Leitungslayout auf der Platine ist sichergestellt, dass ein Leitungsende mit jeweils nur einem der beiden anderen Leitungsenden mittels der Steckbrücke zu verbinden ist. Hierzu sind an dem Leitungsende, über das die Verbindung mit den beiden anderen Leitungsenden im Wechsel herzustellen ist, drei Steckbuchsenkontakte und an den beiden anderen Leitungsenden jeweils zwei Steckbuchsenkontakte vorgesehen. Das Leitungsende mit den drei Steckbuchsenkontakten ist in Form eines rechten Winkels mit einem Steckbuchsenkontakt an der Winkelspitze und jeweils einem Steckbuchsenkontakt in den beiden Winkelschenkeln zum Zusammenwirken mit jeweils zwei der vier Steckbrückenkontakte versehen. Das eine der beiden Leitungsenden mit jeweils zwei Steckbuchsenkontakten ist in gerader Linie zu dem das Leitungsende bildenden Winkelschenkel ausgebildet und mittels der Steckbrücke für die Serienschaltung der Batteriezellen konfigurierbar. Das andere der beiden Leitungsenden ist in gerader Linie mit dem anderen Winkelschenkel ausgebildet und mittels der Steckbrücke für die Parallelschaltung der Batteriezellen konfigurierbar. Durch die erfindungsgemäße Gestaltung der Steckkontakte werden Kurzschlüsse infolge von unzulässigen Leitungsverbindungen bei der Konfiguration einer Verbundbatterie mittels Steckbrücken durch einen Nutzer zuverlässig ausgeschlossen.

Die Montagevorrichtung ermöglicht somit einen Wechsel zwischen Serienschaltung und Parallelschaltung der einzelnen aufzunehmenden Batteriezellen auf einfache, kostengünstige und zuverlässige Weise und ohne besonderen Aufwand, wie etwa die Verwendung von Schweißeinrichtungen und/oder von Spezialwerkzeugen. Werden, anstelle der Steck- oder Lotbrücken, elektronische Schalter bzw. elektronisch steuerbare Schalter verwendet, lassen sich die einzelnen Schaltungsvarianten auf besonders einfache Weise auch bei geschlossenem Gehäuse einer mit der Montagevorrichtung konfigurierten Verbundbatterie herstellen. Gesteuert werden die elektronischen Schalter hierbei durch Einstellelemente an der Gehäuseaußenseite oder über die dritte Anschlussbuchse mittels der von der Montagevorrichtung umfassten Schutzelektronik, die in einer besonderen Ausführung zusätzlich auch zur Steuerung der elektronischen Schalter ausgebildet ist.

Ein besonderer Vorteil der Montagevorrichtung ist es, dass, infolge dieses erfindungsgemäßen Layouts der Platine, die Anzahl der erforderlichen Schaltelemente für beliebige Spannungskonfigurationen einer mit der Montagevorrichtung konfigurierten Verbundbatterie wie folgt begrenzt ist:

$$Anzahl\ der\ Schaltelemente = 2 \times [(Anzahl\ der\ Batteriezellen) - 1],$$

sofern die entsprechenden Schaltelemente gemäß der oben beschriebenen Verschaltungslogik als Wechselschalter ausgebildet sind.

Durch das erfindungsgemäße Schaltungskonzept mit Steckbrücken, elektronischen Schaltelementen und/oder Lotbrücken ist es einem Endanwender somit möglich, eine gewünschte Schaltungsvariante der Batteriezellen einer Verbundbatterie selbständig auf einfache und intuitive Art festzulegen und eine Verbundbatterie jederzeit für weitere Verwendungen anzupassen.

Weiter ist es bevorzugt, auf der Platine der erfindungsgemäßen Montagevorrichtung Anschlussbuchsen vorzusehen, die über die Sammelschienen elektrisch mit den von der Montagevorrichtung aufzunehmenden Batteriezellen verbindbar sind, um die darin gespeicherte elektrische Energie einem Verbraucher bereitzustellen. Dazu sind eine erste Anschlussbuchse über die erste Sammelschiene mit den ersten Kontaktflächen und eine zweite Anschlussbuchse über die zweite Sammelschiene mit den zweiten Kontaktflächen jeweils elektrisch verbunden. Die elektrischen Verbindungen sind hierbei vorzugsweise zum Übertragen von Dauerströmen von bis zu 35 A ausgelegt. Wie bereits angegeben, ist die erste Sammelschiene, und mithin die erste Anschlussbuchse, bevorzugt über die Leistungsleitungen und die ersten Kontaktflächen mit den Pluspolen der von der Montagevorrichtung aufzunehmenden Batteriezellen verbindbar, während die zweite Sammelschiene, und mithin die zweite Anschlussbuchse, über die Leistungsleitungen und die zweiten Kontaktflächen mit den Minuspolen der von der Montagevorrichtung aufzunehmenden Batteriezellen verbindbar ist. Zudem ist bevorzugt eine dritte Anschlussbuchse zur Funktionsüberwachung der Schutzelektronik und zum Spannungsausgleich zwischen den einzelnen Verbundbatterien, auch Balancing genannt, vorgesehen. Dieser Balancing-/Datenanschluss bildet, zusammen mit den beiden hochstromfähigen Anschlüssen, die Schnittstellen einer mit der erfindungsgemäßen Montagevorrichtung konfigurierten Verbundbatterie.

Jeder der von dem ersten und zweiten Gehäuseteil der Montagevorrichtung umfasste Kontaktbereich weist bevorzugt eine Öffnung im Bereich des Zellbechers auf. Diese Öffnungen ermöglichen somit eine unmittelbare Wärmeabfuhr von den zwischen den Kontaktbereichen des ersten und zweiten Gehäuseteils fixierten Batteriezellen. Insbesondere bei einer Verwendung der Montagevorrichtung in feuchter Umgebung kann es jedoch auch von Vorteil sein, auf diese Öffnungen gänzlich zu verzichten. Eine ausreichende Wärmeabfuhr wird in diesem Fall bevorzugt durch eine geeignete Dimensionierung des Innenraums des Gehäuses der Montagevorrichtung und/oder ein Gehäusematerial mit guter Wärmeleitfähigkeit, wie etwa Aluminium, sichergestellt.

Weiterhin ist es bevorzugt, das erste und zweite Gehäuseteil jeweils in einer Weise auszubilden, dass die Platine mit den Batteriezellen auf der ersten bzw. zweiten Großfläche der Platine zumindest teilweise umschlossen sind. Dabei ist das zweite Gehäuseteil entweder fest mit der Platine verbunden, etwa lösbar mittels einer Schraubverbindung oder unlösbar mittels einer Klebeverbindung, während das erste Gehäuseteil lösbar unter Kraftschluss mit dem zweiten Gehäuseteil und/oder der Platine verbunden ist, etwa mittels Schnappelementen. Alternativ ist es bevorzugt, die Platine mittelbar über Reibschluss, Haltestifte und/oder Schnappelemente zwischen dem ersten und dem zweiten Gehäuseteil lösbar zu befestigen.

Die auf der Platine angebrachten Anschlussbuchsen sind bevorzugt über Öffnungen im Nahtbereich der beiden Gehäuseteile zugänglich und werden mittelbar mit den zwischen diesen vorgesehenen Verbindungselementen entsprechend den Batteriezellen in der Montagevorrichtung fixiert.

Vorteilhafterweise sind die Kontaktstellen zwischen dem ersten und zweiten Gehäuseteil sowie zwischen jedem dieser Gehäuseteile und den darin aufzunehmenden Batteriezellen und Anschlussbuchsen gegen Eindringen von Staub und Spritzwasser mit einem jeweils umlaufenden elastischen Dichtbereich, etwa aus Silikon, versehen.

Das erste und zweite Gehäuseteil der Montagevorrichtung weisen auf der der Platine abgewandten Seite jeweils einen umlaufenden Randbereich auf, der in seiner Höhe die einzusetzenden Batteriezellen überragt und mithin ein sicheres Aufliegen auf einer ebenen Unterlage oder dem Randbereich eines ersten oder zweiten Gehäuseteils einer entsprechend ausgebildeten weiteren Montagevorrichtung mit darin eingesetzten Batteriezellen, bzw. einer entsprechenden weiteren Verbundbatterie, ermöglicht.

Bevorzugt weist jeder dieser Randbereiche Ausnehmungen bzw. Randbereichsöffnungen auf, um eine Wärmeabfuhr und damit eine Kühlung der in der erfindungsgemäßen Montagevorrichtung aufzunehmenden Batteriezellen bzw. einer damit konfigurierten Verbundbatterie im Betrieb sicherzustellen.

Weiter ist es bevorzugt das erste und/oder zweite Gehäuseteil auf der der Platine zugewandten Seite mit einer Entlüftungseinrichtung auszubilden, um das bei einem thermischen Defekt von einer Batteriezelle mit hohem Druck freigesetzte heiße Gas unter Druckabbau soweit abzukühlen, dass beim Kontakt mit dem Sauerstoff der Umgebungsluft eine Brandgefahr und mithin eine Beschädigung der Montagevorrichtung zuverlässig zu verhindern sind. Optional umfasst die Entlüftungseinrichtung in jedem der röhrenförmigen Hohlräume eine Flammendurchschlagssicherung in einer Einbuchtung.

Die Entlüftungseinrichtung umfasst dazu einen röhrenförmigen Hohlraum mit wenigstens einem Einlass auf der der Platine zugewandten Innenseite des Gehäuses und mit wenigstens einem Auslass auf der der Platine abgewandten Außenseite des Gehäuses. Der röhrenförmige Hohlraum bildet mithin, neben dem von den beiden Gehäuseteilen begrenzten Innenraum des Gehäuses mit der Platine, einen davon getrennten Gehäusebereich, der einerseits mit dem Innenraum des Gehäuses der die Platine umfasst über den wenigsten einen Einlass und andererseits mit der Gehäuseumgebung über den wenigsten einen Auslass verbunden ist.

Dabei ist es besonders bevorzugt, die Entlüftungseinrichtung entlang einer der beiden Längsseiten des Gehäuses bzw. der Platine vorzusehen und die Trennwand zwischen dem Innenraum des Gehäuses mit der Platine und der Außenwand des Gehäuses in Form von zwei entsprechenden Teilwänden in dem ersten und zweiten Gehäuseteil auszubilden, die in ihrer Längsausdehnung bei der Verwendung der Montagevorrichtung aneinander anliegen und den wenigstens einen Einlass umfassen. Vorteilhafterweise ist das Gehäuse der Montagevorrichtung aus einem wärmebeständigen Kunststoff oder aus Aluminium gefertigt.

Die verschiedenen, in dieser Anmeldung genannten Ausführungsformen der Erfindung sind mit Vorteil miteinander kombinierbar.

Die Erfindung wird nachfolgend in Ausführungsbeispielen anhand der zugehörigen Zeichnungen weitergehend erläutert. Es zeigen:

Figur 1    eine Schaltschema einer Verbundbatterie mit auf Zellebene abgesicherten Einzelzellen zum wahlweisen Betrieb in einer Parallelschaltung oder in einer Serienschaltung gemäß der Erfindung;

Figur 2    eine Montagevorrichtung für eine Verbundbatterie gemäß der Erfindung nach Fig. 1 in Vorderansicht ohne Gehäuse;

Figur 3    die Montagevorrichtung nach Fig. 2 in Rückansicht;

Figur 4    eine schematische Darstellung (a) der Serienschaltung und (b) der Parallelschaltung der Einzelzellen gemäß Fig. 1;

Figur 5    einen Ausschnitt einer Montagevorrichtung gemäß Fig. 2 mit einer Batteriezelle und einer Einfassung eines zweiten Gehäuseteils in einer Platine;

Figur 6    den Ausschnitt der Montagevorrichtung mit der Batteriezelle und dem zweiten Gehäuseteil mit der Einfassung gemäß Fig. 5 im Schnitt A-A;

Figur 7    eine schematische Darstellung einer erfindungsgemäßen Verbundbatterie mit sechs Batteriezellen mit (a) einem zugehörigen ersten Gehäuseteil und (b) einer Montagevorrichtung entsprechend Figur 2 mit sechs Batteriezellen in einem zweiten Gehäuseteil sowie (c) eine schematische Darstellung der Verbundbatterie gemäß (a) und (b) im Schnitt B-B;

Figur 8    eine schematische Darstellung einer elektrischen Verschaltung von drei Montagevorrichtungen gemäß Figur 2 eines erfindungsgemäßen Akkupacks;

Figur 9    eine schematische Außenansicht eines erfindungsgemäßen Akkupacks mit drei Verbundbatterien in Reihenschaltung.

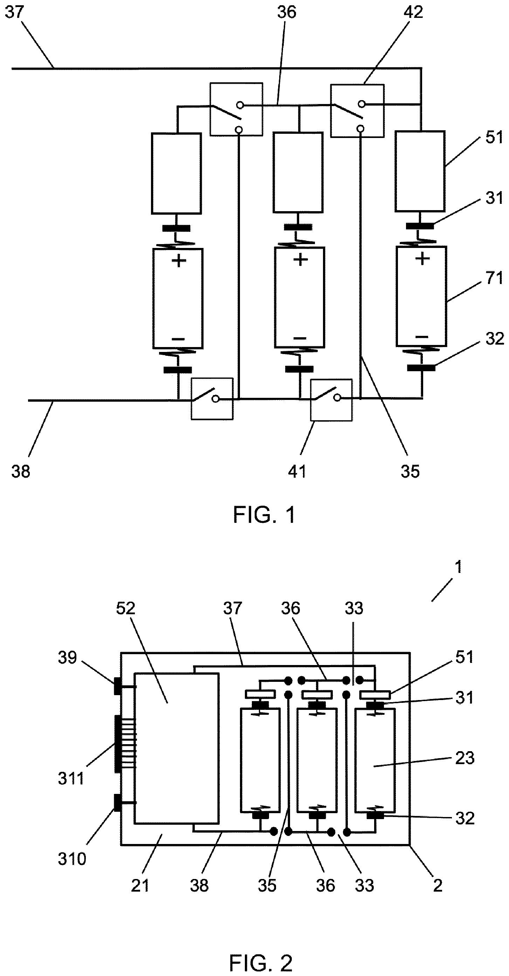

In Figur 1 ist ein Schaltschema einer mit der erfindungsgemäßen Montagevorrichtung 1 konfigurierten Verbundbatterie 7 dargestellt. Zum wahlweisen Betrieb der Batteriezellen 71 der Verbundbatterie 7 in einer Serienschaltung oder in einer Parallelschaltung ist jede Batteriezelle 71 an ihrem Pluspol über eine erste Kontaktfläche 31 und eine Sicherungsvorrichtung 51 für den Überstromschutz mittels zweiter Leistungsleitungen 36 und Wechselschaltern 42 mit einer ersten Sammelschiene 37 elektrisch verbunden. Über eine zweite Kontaktfläche 32 ist jede Batteriezelle 71 an ihrem Minuspol mittels zweiten Leistungsleitungen 36 und Einschalter 41 mit einer zweiten Sammelschiene 38 elektrisch verbunden. Die so bereitgestellte elektrische Energie ist durch einen Verbraucher über die erste und zweite Sammelschiene 37, 38 abzugreifen.

Figur 2 zeigt eine Vorderansicht der erfindungsgemäßen Montagevorrichtung 1 für eine Verbundbatterie 7 ohne Gehäuse. Die erste Großfläche 21 der von der Montagevorrichtung 1 umfassten Platine 2 weist in der dargestellten Ausführungsform drei Aussparungen 23 mit jeweils zugeordneten ersten und zweiten Kontaktflächen 31, 32 in Form von elektrisch leitenden Federkontakten auf. Jeweils in unmittelbarer elektrischer Verbindung mit der ersten Kontaktfläche 31 ist eine, über eine Sicherungsvorrichtung 51 in Form einer in einer Steckbuchse, lösbar eingesetzten Stecksicherung für der Überstromschutz vorgesehen. Von der Steckbuchse der Sicherungsvorrichtung 51 führt jeweils eine zweite Leistungsleitung 36 zu einem Kontenpunkt 33. Dieser umfasst Kontaktflächen zur elektrischen Verbindung mit einem Schalterelement in Form eines Wechselschalters 42 für einen alternativen Anschluss von in den Aussparungen 23 aufzunehmenden Batteriezellen 71 in einer Parallelschaltung über die zweiten Leistungsleitungen 36 oder in einer Serienschaltung über die zweiten Leistungsleitungen 36 und erste Leistungsleitungen 35. Der Pluspol der in Serie geschalteten Batteriezellen 71 ist so über die zweiten Leistungsleitungen 36 und eine erste Sammelschiene 37 mit dem entsprechenden Eingang einer von der Sicherheitseinrichtung umfassten Schutzelektronik 52 auf der ersten Großfläche 21 der von der Montagevorrichtung 1 umfassten Platine 2 verbindbar, während der Minuspol der in Serie geschalteten Batteriezellen 71 über die zweiten Leistungsleitungen 36 und eine zweite Sammelschiene 38 mit dem entsprechenden Eingang der Schutzelektronik 52 verbindbar ist. Der Anschluss der erfindungsgemäßen Montagevorrichtung 1 an einen Verbraucher erfolgt über eine erste und zweite Anschlussbuchse 39, 310, die über die Schutzelektronik 52 an die erste Sammelschiene 37 bzw. zweite Sammelschiene 38 angeschlossen sind. Über eine dritte Anschlussbuchse 311 wird ein Zugriff auf die Schutzelektronik 52 zur Funktionsüberwachung und zu Steuerungszwecken ermöglicht.

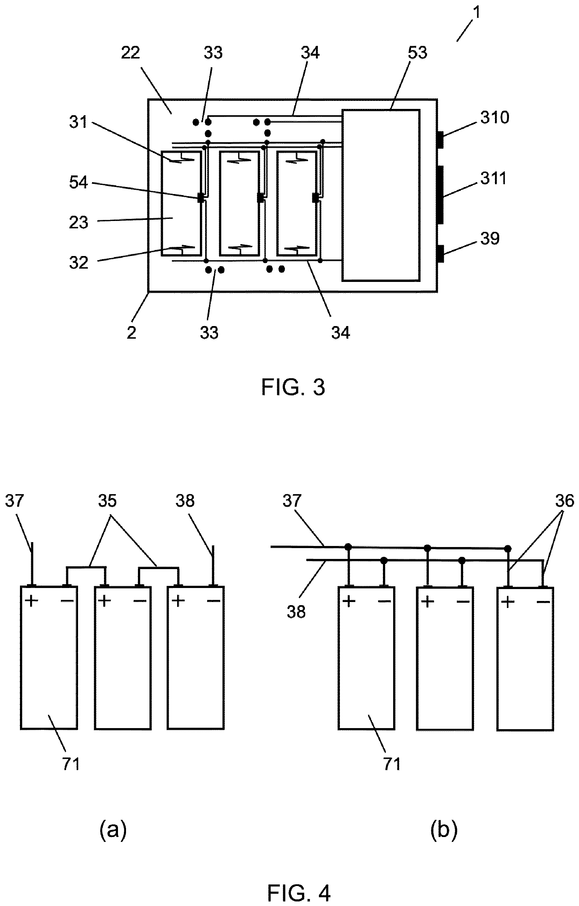

Figur 3 zeigt die Rückansicht der in Figur 2 dargestellten erfindungsgemäßen Montagevorrichtung 1 ohne Gehäuse. Auf der zweiten Großfläche 22 der von der Montagevorrichtung 1 umfassten Platine 2 ist an jeder der drei Aussparungen 23 ein Temperatursensor 54 zum Überwachen der Temperatur der jeweils in eine Aussparung 23 aufzunehmenden Batteriezelle 71 angeordnet. Jeder Temperatursensor 54 ist über Steuerleitungen 34 mit einer Temperaturüberwachung 53 zum Erfassen der Zellentemperatur elektrisch verbunden. In der dargestellten Ausführungsform ist die Temperaturüberwachung 53 als separates Schaltungselement auf der zweiten Großfläche 22 der Platine 2 angeordnet, wobei über die dritte Anschlussbuchse 311 einerseits ein Zugriff auf die Temperaturüberwachung 53 und andererseits eine Wirkverbindung mit der Schutzelektronik 52 auf der ersten der Großfläche 21 der Platine 2 besteht. Die dafür erforderlichen elektrischen Verbindungen sind als Steuerleitungen 34 ausgebildet; eine Anordnung der Temperaturüberwachung 53 auf der ersten Großfläche 21 der Platine 2 mit entsprechender Durchführung der Steuerleitungen 34 ist allerdings genauso möglich und stellt eine gleichermaßen bevorzugte Alternative dar. In beiden Fällen umfasst die Sicherheitseinrichtung der erfindungsgemäßen Montagevorrichtung 1 eine Schutzelektronik 52, eine Temperaturüberwachung 53, Schutzvorrichtungen 61 und Temperatursensoren 54.

Die in den Figuren 2 und 3 dargestellte Ausführungsform der erfindungsgemäßen Montagevorrichtung 1 ist damit für eine Serienanordnung mit drei Batteriezellen 71, entsprechend der schematischen Darstellung nach Figur 4 (a) über zwei erste Leistungsleitungen 35 untereinander elektrisch verbunden. Die Verbindung mit einem Verbraucher ist über die mit dem Pluspol der Serienschaltung verbundene erste Sammelschiene 37 und über die mit dem Minuspol der Serienschaltung verbundene zweite Sammelschiene 38 möglich.

Figur 4 (b) zeigt die drei Batteriezellen 71 in einer Parallelanordnung. Hierbei sind die Pluspole der Batteriezellen 71 jeweils über zweite Leistungsleitungen 36 mit der ersten Sammelschiene 37 elektrisch verbunden, während die Minuspole mit der zweiten Sammelschiene 38 elektrisch zur Verbindung mit dem Verbraucher verbunden sind.

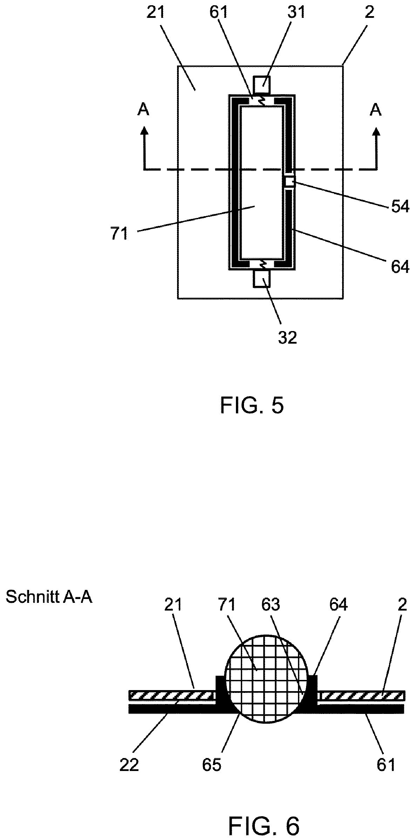

Ein Ausschnitt einer Montagevorrichtung 1 in Draufsicht gemäß Figur 2 ist in Figur 5 schematisch wiedergegeben. Eine in die Montagevorrichtung 1 eingesetzte Batteriezelle 71 ist hierbei teilweise von einer Einfassung 64 eines ersten Gehäuseteils 61 aus Kunststoff und einer rechteckigen Aussparung 23 in einer Platine 2 umschlossen. Die derart mechanisch gehalterte Batteriezelle ist zudem über eine erste und eine zweite Kontaktfläche 31, 32 mit den (nicht dargestellten) Leiterbahnen auf der Platine 2 elektrisch verbunden. Bei der Batteriezelle 71 handelt es sich um eine Rundzelle des Norm-Typs 18650.

Figur 6 zeigt den Ausschnitt der Montagevorrichtung 1 in einer schematischen Schnittdarstellung entlang der Schnittlinie A-A in Figur 5. Das erste Gehäuseteil 61 ist in der dargestellten Ausführungsform mittels einer Klebeverbindung fest mit Platine 2 verbunden. Die Einfassung 64 durchdringt die Platine 2 und überragt diese, wodurch einerseits eine definierte Zuordnung der (nicht dargestellten) ersten und zweiten Kontaktfläche 31, 32 auf der Platine 2 zu den (nicht dargestellten) elektrischen Kontakten 72 der Batteriezelle 71 gewährleistet ist und andererseits eine Kühlfläche in Form der Einfassung 64 für die Batteriezelle 71 bereitgestellt wird. Die Batteriezelle 71 liegt an dem von der Einfassung 64 umfassten Kontaktbereich 63 des ersten Gehäuseteils 61 flächig an. Eine weitergehende Kühlung der Batteriezelle 71 wird durch eine Öffnung 65 im Kontaktbereich 63 ermöglicht.

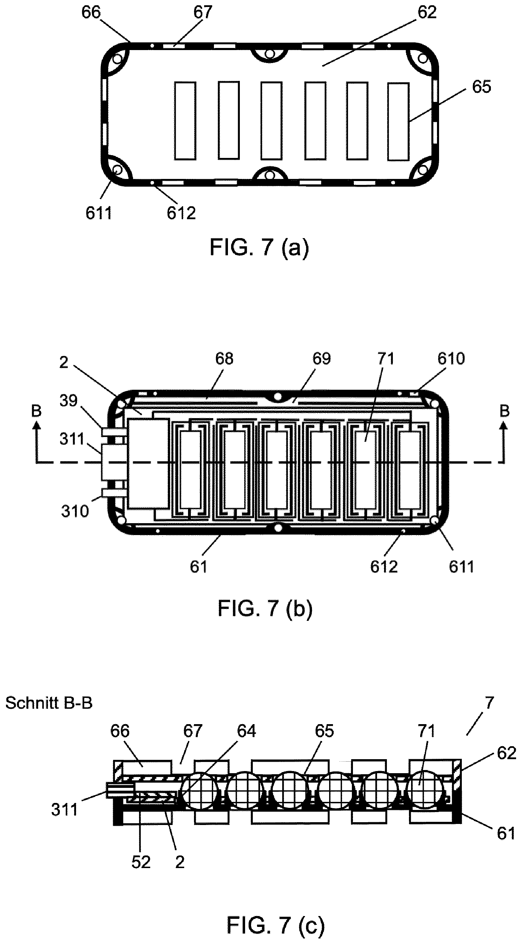

In Figur 7 ist eine erfindungsgemäße Verbundbatterie 7 mit sechs Batteriezellen 71 des Norm-Typs 18650 in drei schematischen Ansichten wiedergegeben. Jeweils in Draufsicht zeigen Figur 7(a) ein zugehöriges zweites Gehäuseteil 62 und Figur 7(b) ein zugehöriges erstes Gehäuseteil 61 mit einer Montagevorrichtung 1 entsprechend Figur 2 und den sechs Batteriezellen 71. Figur 7(c) zeigt die Verbundbatterie 7 mit dem zweiten Gehäuseteil 62 gemäß Figur 7(a) und dem ersten Gehäuseteil 61 gemäß Figur 7(b) im Schnitt B-B. Die beiden Gehäuseteile 61, 62 sind hierbei als Spritzgussteile aus einem wärmebeständigen Kunststoff geformt.

Figur 7(a) zeigt das zweite Gehäuseteil 62 mit sechs Öffnungen 65 zur Wärmeabfuhr in den Kontaktbereichen 63 der Batteriezellen 71 in einer Draufsicht und mithin eine Außenseite der Verbundbatterie 7. Für eine Schraubverbindung mit dem ersten Gehäuseteil 61 sind in den Ecken und in den beiden längsseitigen Randbereichswandungen erste Befestigungselemente 611 in Form von Bohrungen ausgebildet. Diese Wandabschnitte umfassen zudem zweite Befestigungselemente 612 als Sackbohrungen zur lösbaren Aufnahme von zweiten Verbindungselementen 82 in Form von Stiften. Die ersten Befestigungselemente 611 sind von innenliegenden Wandbereichen in Kreissegmentform aus Stabilitätsgründen begrenzt. Darüber hinaus sind Ausnehmungen in den längsseitigen Randwandungen jeweils zwischen den ersten und zweiten Befestigungselementen 611, 612 ausgebildet. Diese stellen sicher, dass die über die Öffnungen 65 beim Betrieb der Verbundbatterie 7 von den Batteriezellen 71 abgegebene Wärme zuverlässig auch dann abgeführt werden kann, wenn die Verbundbatterie 7 auf einer ebenen Fläche aufliegt oder mit mehreren Verbundbatterien 7 gestapelt in einem Akkupack 8 verwendet wird.

Figur 7(b) zeigt die Innenseite des ersten Gehäuseteils 61 der Verbundbatterie 7. Die Randwandung des ersten Gehäuseteils 61 ist deckungsgleich mit der des zweiten Gehäuseteils 62 ausgebildet und umfasst erste und zweite Befestigungselemente 611, 612 in entsprechender Anordnung zur lösbaren Verbindung mit dem zweiten Gehäuseteil 62 über die vorgenannten ersten und zweiten Verbindungselemente 81, 82. Zudem ist entlang einer der beiden längsseitigen Randwandungen eine Entlüftungseinrichtung 68 in Form eines röhrenförmigen Hohlraums mit einem Einlass 69 auf der der Platine 2 zugewandten Innenseite des ersten Gehäuseteils 61 und mit zwei Auslässen 610 in der Randwandung ausgebildet. In der dargestellten Ausführungsform wird der röhrenförmigen Hohlraum der Entlüftungseinrichtung 68 somit von der Trennwand mit dem Einlass 69 und der gegenüberliegenden Randwandung mit den beiden Auslässen 610 vertikal begrenzt, während die laterale Begrenzung durch jeweils einen Teilbereich der Grundfläche des ersten Gehäuseteils 61 und des zweiten Gehäuseteils 62 erfolgt. Neben den beiden Auslässen 610 sind in der Randwandung des ersten Gehäuseteils 61 zudem drei Ausnehmungen für die erste, zweite und dritte Anschlussbuchse 39, 310, 311 der Verbundbatterie 7 ausgebildet, die so bemessen sind, dass ein Staub- und Spritzwasserschutz des Gehäuseinnenraums im Betriebszustand der Verbundbatterie 7 gewährleistet ist, wobei jede der drei Anschlussbuchsen 39, 310, 311 auch an der entsprechenden Randwandung des zweiten Gehäuseteils 62 anliegt. Die Kontaktbereiche 63 im ersten Gehäuseteil 61 sind zur Lagestabilisierung der daran anliegenden Batteriezellen 71 als Einfassungen 64 ausgeformt, welche die Aussparungen 23 in der Platine 2 jeweils durchdringen und die Hälfte der Mantelfläche jeder Batteriezelle 71 umschließen. Stirnseitig umfasst jede der Einfassungen eine Ausnehmung für die auf der Platine 2 zur elektrischen Kontaktierung der Batteriezellen 71 vorgesehenen ersten und zweiten Kontaktflächen 31, 32, die hierbei als Federkontakte ausgebildet sind. Die Platine 2 ist in dieser Ausführungsform der erfindungsgemäßen Verbundbatterie 7 fest mit der Innenseite des ersten Gehäuseteils 61 verklebt und entsprechend den Figuren 2 und 3 ausgebildet. Statt den jeweils drei in den Figuren 2 und 3 dargestellten Aussparungen, weist die Platine 2 hier sechs Aussparungen 23 auf, von denen jede eine Batteriezelle 71 in einer Einfassung 64 umschließt.

In Figur 7(c) ist die Verbundbatterie 7 mit dem zweiten Gehäuseteil 62 gemäß Figur 7(a) und dem ersten Gehäuseteil 61 gemäß Figur 7(b) im Schnitt B-B schematisch dargestellt. Die lösbare Verbindung zwischen den beiden Gehäuseteilen 61 und 62 wird hierbei durch Schrauben bewirkt, die als erste Verbindungsmittel 81 in den dafür vorgesehenen Bohrungen als erste Befestigungselemente 611 angebracht sind.

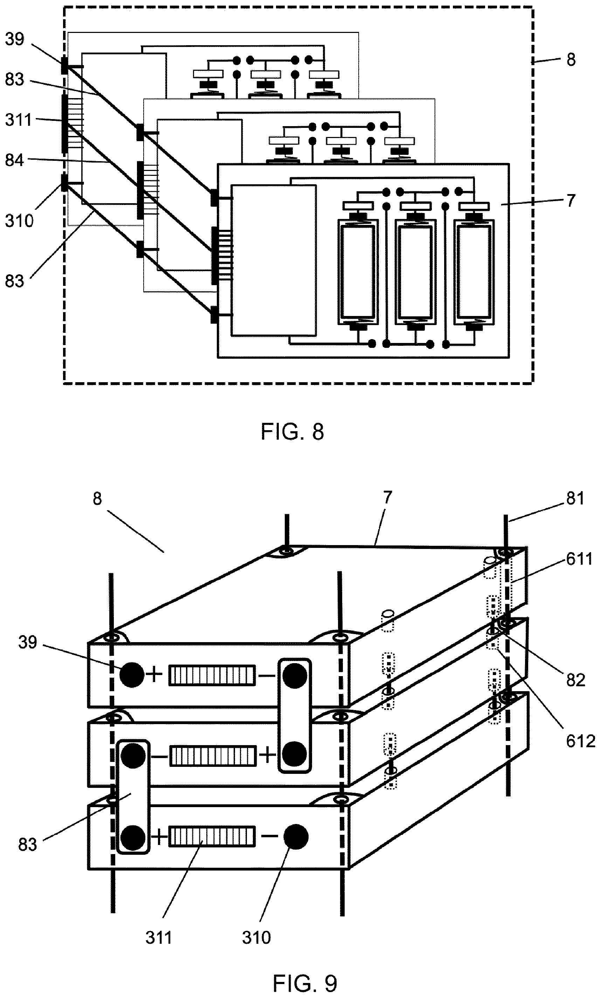

In Figur 8 ist die elektrische Verschaltung von drei Verbundbatterien 7 mit jeweils einer erfindungsgemäßen Montagevorrichtung 1 entsprechend Figur 2 und drei Batteriezellen 71 in einer Parallelanordnung zu einem Akkupack 8 schematisch dargestellt. Für die Parallelschaltung der drei Verbundbatterien 7 des erfindungsgemäßen Akkupacks 8 sind alle ersten Anschlussbuchsen 39 und alle zweiten Anschlussbuchsen 310 jeweils untereinander elektromechanisch lösbar verbunden. Dazu sind die ersten und zweiten Anschlussbuchsen 39, 310 jeweils in bevorzugter Weise als Gewindestifte ausgebildet und mittels jeweils eines Anschlusselements 83 in Form einer elektrisch leitenden Metallbrücke mit drei entsprechenden Bohrungen miteinander verschraubt. Der Anschluss an einen Verbraucher erfolgt über eine der ersten Anschlussbuchsen 39 und eine der zweiten Anschlussbuchsen 310 der drei Verbundbatterien 7 wiederum durch eine lösbare Schraubverbindung. Diese bevorzugte Art der elektromechanischen Verbindung der einzelnen Verbundbatterien 7 des Akkupacks 8 erlaubt auch bei einer möglichen Erwärmung der Anschlussbuchsen eine zuverlässige elektrische Kontaktierung. Die Funktionsüberwachung des Akkupacks 8 sowie ein Spannungsausgleich zwischen den einzelnen Verbundbatterien 7 wird über die in jeder der drei Verbundbatterien 7 vorgesehene dritte Anschlussbuchse 311 ermöglicht. Die dritten Anschlussbuchsen 311 werden dazu mit einem Leitungselement 84 in Form eines Flachbandkabels verbunden.

Figur 9 zeigt schließlich einen Akkupack 8 mit drei Verbundbatterien 7 in Reihenschaltung in seiner schematischen wiedergegebenen äußeren Erscheinungsform. Das erste und zweite Gehäuseteil 61, 62 jeder einzelnen Verbundbatterie 7 sind hierbei geschlossen, ohne Öffnungen 65 im Bereich der Batteriezellen 71, aus Aluminiumdruckguss ausgebildet. Die elektrische Verbindung der drei Verbundbatterien 7 in Reihenschaltung wird durch zwei Anschlusselemente 83 bewirkt. Jedes dieser Anschlusselemente 83 ist in diesem Ausführungsbeispiel als elektrisch leitende metallische Brücke mit zwei Bohrungen ausgeführt. Die ersten und zweiten Anschlussbuchsen 39, 310 der drei Verbundbatterien 7 sind, wie bevorzugt, als Gewindestifte ausgebildet. Die erste Anschlussbuchse 39 der ersten Verbundbatterie 7 und die zweite Anschlussbuchse 310 der in der Darstellung darauf angeordneten zweiten Verbundbatterie 7 sind über das erste der beiden Anschlusselemente 83 miteinander verschraubt, während die erste Anschlussbuchse 39 der zweiten Verbundbatterie 7 und die zweite Anschlussbuchse 310 der in der Darstellung darauf angeordneten dritten Verbundbatterie 7 auf die gleiche Weise mittels des zweiten Anschlusselements 83 elektromechanisch miteinander lösbar verbunden sind. Der Anschluss an einen externen Verbraucher erfolgt in diesem Fall über die zweite Anschlussbuchse 310, bzw. den Minuspol, der ersten Verbundbatterie 7 und die erste Anschlussbuchse 39, bzw. den Pluspol, der dritten Verbundbatterie 7. Eine Funktionsüberwachung des Akkupacks 8 sowie ein Spannungsausgleich zwischen den einzelnen Verbundbatterien 7 werden wiederum über die in jeder der drei Verbundbatterien 7 vorgesehenen dritten Anschlussbuchsen 311 ermöglicht.

Jede der drei Verbundbatterien umfasst eine erfindungsgemäße Montagevorrichtung 1 mit einer Platine 2 und einer ersten, zweiten und dritten Anschlussbuchse 39, 310, 311 entsprechend Figur 2 sowie ein Gehäuse mit einem ersten und einem zweiten Gehäuseteil 61, 62 entsprechend Figur 7. Die beiden Gehäuseteile 61, 62 sind aus Kunststoff gefertigt und weisen jeweils eine Öffnung 65 zur Wärmeabfuhr im Kontaktbereich 63 einer Batteriezelle 71 auf. Jede der Batteriezellen 71 ist im Innern des Gehäuses zur Lagestabilisierung teilweise von einer Einfassung 64 umschlossen, die wiederum von einer Aussparung 23 in der Platine 2 umgeben ist. Die Einfassungen 64 sind jeweils in dem ersten Gehäuseteil 61 ausgeformt. Das erste und zweite Gehäuseteil 61, 62 und die Platine 2 jeder Verbundbatterie 7 weisen in den Ecken erste Befestigungselemente 611 in Form von Bohrungen auf. Zudem umfassen die beiden Gehäuseteile 61, 62 jeder Verbundbatterie 7 auf der Außenseite im Randbereich ihrer Großflächen in normaler Anordnung zur Platine 2 jeweils mehrere zweite Befestigungselemente 612 in Form von Sacklöchern. In den Sacklöchern sind zweite Verbindungselemente 82 in Form von Distanzstiften lösbar angebracht. Auf diese Weise werden die Verbundbatterien 7 des Akkupacks 8 in der gewünschten lateralen Zuordnung auf Abstand gehalten. In Verbindung mit den Öffnungen 65 in den ersten und zweiten Gehäuseteilen 61, 62 ist somit eine ausreichende Kühlung der Batteriezellen 71 beim Betrieb des Akkupacks 8 sichergestellt. Die drei Verbundbatterien 7 werden in ihrer vertikalen Anordnung durch jeweils ein erstes Verbindungselement 81 in Form einer Gewindestange in den Bohrungen in den Ecken der einzelnen Gehäuse mittels Muttern lösbar gegeneinander verspannt. Gleichzeitig werden dadurch sowohl die Batteriezellen 71 als auch die erste, zweite und dritte Anschlussbuchse 39, 310, 311 der einzelnen Verbundbatterien 7 zwischen den zugehörigen ersten und zweiten Gehäuseteilen 61, 62 fixiert und der Gehäuseinnerraum gegen Staub und Spritzwasser geschützt.

Bezugszeichenliste

| | |
|---|---|
| 1 | Montagevorrichtung |
| 2 | Platine |
| 21 | erste Großfläche |
| 22 | zweite Großfläche |
| 23 | Aussparung |
| 31 | erste Kontaktfläche |
| 32 | zweite Kontaktfläche |
| 33 | Knotenpunkt |
| 34 | Steuerleitung |
| 35 | erste Leistungsleitung |
| 36 | zweite Leistungsleitung |
| 37 | erste Sammelschiene |
| 38 | zweite Sammelschiene |
| 39 | erste Anschlussbuchse |
| 310 | zweite Anschlussbuchse |
| 311 | dritte Anschlussbuchse |
| 41 | Einschalter |
| 42 | Wechselschalter |
| 51 | Sicherungsvorrichtung |
| 52 | Schutzelektronik |

| 53 | Temperaturüberwachung |
|---|---|
| 54 | Temperatursensor |
| 61 | erstes Gehäuseteil |
| 62 | zweites Gehäuseteil |
| 63 | Kontaktbereich |
| 64 | Einfassung |
| 65 | Öffnung |
| 66 | Randbereich |
| 67 | Randbereichsöffnung |
| 68 | Entlüftungseinrichtung |
| 69 | Einlass |
| 610 | Auslass |
| 611 | erstes Befestigungselement |
| 612 | zweites Befestigungselement |
| 7 | Verbundbatterie |
| 71 | Batteriezelle |
| 72 | elektrischer Kontakt |
| 8 | Akkupack |
| 81 | erstes Verbindungselement |
| 82 | zweites Verbindungselement |
| 83 | Anschlusselement |
| 84 | Leitungselement |

## Patentansprüche

1. Montagevorrichtung (1) für eine Verbundbatterie (7) zum Bereitstellen von unterschiedlichen Spannungen und Strömen für einen Verbraucher aus wenigstens einer Batteriezelle (71), insbesondere wenigstens einer Rundzelle eines Akkumulators, mit elektrischen Kontakten (72) zur Entnahme der gespeicherten elektrischen Energie, die Montagevorrichtung (1) umfassend eine Platine (2) mit elektrischen Leitungen (34, 35, 36, 37, 38) und Schalterelementen (41, 42) zum elektrischen Verbinden der wenigstens einen Batteriezelle mit dem Verbraucher und einer Sicherheitseinrichtung (51, 52, 53, 54) zur Funktionsüberwachung der wenigstens einen Batteriezelle,
**dadurch gekennzeichnet, dass**

ein Gehäuse (61, 62) zur Aufnahme einer Mehrzahl von Batteriezellen mit einem ersten Gehäuseteil (61) und einem zweiten Gehäuseteil (62) vorgesehen ist,

wobei jedes erste und zweite Gehäuseteil eine Mehrzahl von Kontaktbereichen (63) aufweist,
wobei jede Batteriezelle zwischen jeweils zumindest einem Kontaktbereich des ersten und zweiten Gehäuseteils fixierbar ist,
wobei jeder Kontaktbereich in dem ersten und/oder zweiten Gehäuseteil als Einfassung (64) zur Aufnahme jeweils einer Batteriezelle ausgebildet ist und
wobei jede Einfassung zum zumindest teilweisen Umschließen einer darin aufnehmbaren Batteriezelle ausgebildet ist;

die Platine eine Mehrzahl von Aussparungen (23) zur Aufnahme jeweils einer Einfassung (64) mit einer Batteriezelle aufweist,

wobei jede Aussparung eine erste Kontaktfläche (31) zum elektrischen Verbinden eines Pluspols einer Batteriezelle und eine zweite Kontaktfläche (32) zum elektrischen Verbinden eines Minuspols der Batteriezelle mit den elektrischen Leitungen aufweist,
wobei jeweils eine der Kontaktflächen, bevorzugt die erste Kontaktfläche, über die Sicherheitseinrichtung mit den Leitungen der Platine elektrisch verbunden ist und die Sicherheitseinrichtung eine Sicherungsvorrichtung (51) für jede Batteriezelle zur elektrischen Überstromsicherung umfasst,
wobei jede Batteriezelle in einer Einfassung elektrisch über die jeweils erste und zweite Kontaktfläche mit der Platine in lösbarer Weise verbindbar ist und
wobei jede Aussparung in der Platine so bemessen ist, dass eine Batteriezelle in einer Einfassung in ihrer maximalen Querschnittsfläche umschließbar ist.

2. Montagevorrichtung (1) nach Anspruch 1, wobei jede erste und zweite Kontaktfläche (31, 32) in Form einer metallischen Kontaktfeder ausgebildet ist.

3. Montagevorrichtung (1) nach Anspruch 1 oder 2, wobei die Sicherungsvorrichtung (51) eine elektrische Stecksicherung und eine Buchse in lösbarer Verbindung umfasst und wobei die Buchse nicht lösbar, insbesondere nicht thermisch lösbar, mit den Leitungen (34, 35, 36, 37, 38) der Platine (2) elektrisch verbunden ist.

4. Montagevorrichtung (1) nach einem der vorausgehenden Ansprüche, wobei die Sicherheitseinrichtung (51, 52, 53, 54) eine Schutzelektronik (52), insbesondere einen Spannungsausgleichsregler eines Batteriemanagementsystems, zur Vermeidung einer Tiefentladung und Überladung jeder Batteriezelle (71) und/oder eine Temperaturüberwachung (53) für die wenigstens eine Batteriezelle mit wenigstens einem Temperatursensor (54) umfasst.

5. Montagevorrichtung (1) nach einem der vorausgehenden Ansprüche, wobei die Sicherheitseinrichtung (51, 52, 53, 54) in elektrischer Verbindung mit den elektrischen Leitungen (34, 35, 36, 37, 38) auf der Platine (2) angeordnet ist.

6. Montagevorrichtung (1) nach einem der vorausgehenden Ansprüche, wobei die elektrischen Leitungen (34, 35, 36, 37, 38) der Platine (2) umfassen:

   Steuerleitungen (34) für die Funktionsüberwachung der wenigstens einen Batteriezelle (71) und für den Spannungsausgleich zwischen den Batteriezellen,
   eine Mehrzahl von ersten Leistungsleitungen (35) für eine Serienschaltung der Batteriezellen,
   eine Mehrzahl von zweiten Leistungsleitungen (36) für eine Parallelschaltung der Batteriezellen,
   eine erste Sammelschiene (37) zum Herstellen einer elektrischen Verbindung zwischen dem Pluspols wenigstens einer Batteriezelle und dem Verbraucher und
   eine zweite Sammelschiene (38) zum Herstellen einer elektrischen Verbindung zwischen dem Minuspols wenigstens einer Batteriezelle und dem Verbraucher.

7. Montagevorrichtung (1) nach Anspruch 6, wobei die ersten und zweiten Leistungsleitungen (35, 36) auf einer ersten Großfläche (21) der Platine (2) und die Steuerleitungen (34) auf einer zweiten Großfläche (22) der Platine angeordnet sind.

8. Montagevorrichtung (1) nach Anspruch 6 oder 7, wobei die Schaltelemente (41, 42) zum Öffnen und Schließen der elektrischen Verbindung zwischen wenigstens einer Batteriezelle (71) und den ersten Leistungsleitungen (35) oder den zweiten Leistungsleitungen (36) an Knotenpunkten (33) der elektrischen Leitungen der Platine (2) vorgesehen sind.

9. Montagevorrichtung (1) nach Anspruch 8, wobei die Schaltelemente (41, 42) zum elektrischen Verbinden der Batteriezellen (71) in der Serienschaltung und der Parallelschaltung vorgesehen sind,
   wobei die Schaltelemente umfassen: zumindest einen elektromechanischen Schalter, insbesondere zumindest eine Steckbrücke mit einer Steckbuchse, eine Lotbrücke oder ein Relais, und/oder zumindest einen elektronisch steuerbaren Schalter.

10. Montagevorrichtung (1) nach einem der vorausgehenden Ansprüche 8 oder 9, wobei die Platine (2), in jeweils elektrischer Verbindung mit den Knotenpunkten (33), eine erste Anschlussbuchse (39) und eine zweite Anschlussbuchse (310) in elektrischer Verbindung mit der zweiten Sammelschiene (38) zum Bereitstellen der elektrischen Energie der Verbundbatterie, insbesondere von Dauerströmen bis zu 35 A, und eine dritte Anschlussbuchse (311) zur Funktionsüberwachung der Schutzelektronik (52) und zum Spannungsausgleich umfasst.

11. Montagevorrichtung (1) nach einem der vorausgehenden Ansprüche, wobei jeder Kontaktbereich (63) in dem ersten und/oder dem zweiten Gehäuseteil (61, 62) eine Öffnung (65) aufweist,

    wobei das erste Gehäuseteil die Platine (2) mit den Batteriezellen auf der ersten Großfläche (21) der Platine zumindest teilweise umschließt,
    wobei das zweite Gehäuseteil die Platine mit den Batteriezellen auf der zweiten Großfläche (22) der Platine zumindest teilweise umschließt,
    wobei das zweite Gehäuseteil fest oder lösbar mit der Platine verbunden ist und
    wobei das erste Gehäuseteil lösbar mit dem zweiten Gehäuseteil und/oder mit der Platine verbunden ist.

**12.** Montagevorrichtung (1) nach einem der vorausgehenden Ansprüche, wobei das erste und zweite Gehäuseteil (61, 62) auf der der Platine (2) abgewandten Seite jeweils einen umlaufenden Randbereich (66), der in seiner Höhe die von der Montagevorrichtung aufzunehmenden Batteriezellen (71) überragt, aufweist und jeweils mit einer Mehrzahl von Randbereichsöffnungen (67) ausgebildet ist und

wobei das erste und/oder zweite Gehäuseteil auf der der Platine zugewandten Seite eine Entlüftungseinrichtung (68) zum kontrollierten Druckabbau im Falle einer thermischen Zerstörung einer von der Montageeinrichtung aufgenommenen Batteriezelle umfasst,

wobei die Entlüftungseinrichtung als röhrenförmiger Hohlraum mit wenigstens einem Einlass (69) auf der der Platine zugewandten Innenseite des Gehäuses (61, 62) und mit wenigstens einem Auslass (610) auf der der Platine abgewandten Außenseite des Gehäuses ausgebildet ist.

**13.** Montagevorrichtung (1) nach einem der vorausgehenden Ansprüche 11 oder 12, wobei das Gehäuse (61, 62) die erste, zweite und dritte Anschlussbuchse (39, 310, 311) und erste und zweite Befestigungselemente (611, 612), insbesondere in Form von Bohrungen und Sackbohrungen, zum Befestigen der Montagevorrichtung aufweist.

**14.** Verbundbatterie (7) zum Bereitstellen von elektrischer Energie für einen Verbraucher, umfassend wenigstens eine Batteriezelle (71), bevorzugt wenigstens eine Rundzelle eines Akkumulators, besonders bevorzugt wenigstens eine Lithiumionen-Rundzelle, mit elektrischen Kontakten (72) zur Entnahme der gespeicherten elektrischen Energie,

**dadurch gekennzeichnet, dass**
eine Montagevorrichtung (1) zum Bereitstellen von unterschiedlichen Spannungen und Strömen für einen Verbraucher aus der wenigstens einen Batteriezelle (71) gemäß einem der Ansprüche 1-13 vorgesehen ist.

**15.** Akkupack (8) zum Bereitstellen von elektrischer Energie für einen Verbraucher, **dadurch gekennzeichnet, dass**

zum Bereitstellen der elektrischen Energie für den Verbraucher eine Mehrzahl von Verbundbatterien (7) gemäß Anspruch 14 vorgesehen sind,

wobei die Mehrzahl der Verbundbatterien mechanisch über die in jeder Verbundbatterie vorgesehenen ersten Befestigungselemente (611), insbesondere in Form von Bohrungen, und erste Verbindungselemente (81), insbesondere in Form von Gewindestangen, lösbar untereinander befestigt sind und durch die in jeder Verbundbatterie vorgesehenen zweiten Befestigungselemente (612), insbesondere in Form von Sackbohrungen, mittels zweiter Verbindungselemente (82), insbesondere in Form von Stiften, lösbar in vertikal oder horizontal, gestapelter Anordnung gehalten werden,

wobei der Akkupack mittels den ersten Befestigungselementen und den ersten Verbindungselementen kraftschlüssig befestigbar ist,

wobei die Mehrzahl der Verbundbatterien elektrisch über die in jeder Verbundbatterie vorgesehene erste und zweite Anschlussbuchse (39, 310) mittels Anschlusselementen (83) in Serienschaltung oder Parallelschaltung untereinander lösbar verbunden ist,

wobei eine der ersten und zweiten Anschlussbuchsen der Mehrzahl der Verbundbatterien für die Bereitstellung der elektrischen Energie des Akkupacks für einen Verbraucher vorgesehen sind und

wobei jede dritte Anschlussbuchse (311) der Mehrzahl der Verbundbatterien zur Funktionsüberwachung und zum Spannungsausgleich mittels eines Leitungselements (84) verbindbar ist.

## Claims

**1.** Mounting device (1) for a composite battery (7) for providing different voltages and currents for a consumer from at least one battery cell (71), in particular at least one round cell of an accumulator, having electrical contacts (72) for removing the stored electrical energy, said mounting device (1) comprising a printed circuit board (2) with electrical lines (34, 35, 36, 37, 38) and switching elements (41, 42) for electrically connecting the at least one battery cell to the consumer and a safety device (51, 52, 53, 54) for monitoring the function of the at least one battery cell, **characterized in that**

a housing (61, 62) for receiving a plurality of battery cells comprising a first housing part (61) and a second housing part (62) is provided,

wherein each first and second housing part comprises a plurality of contact regions (63),

wherein each battery cell can be fixed between in each case at least one contact region of the first and second housing part,

wherein each contact region in the first and/or second housing part is designed as an enclosure (64) for receiving in each case one battery cell, and

wherein each enclosure is designed for at least partially enclosing a battery cell that can be accommodated therein;

the printed circuit board comprises a plurality of recesses (23) for receiving in each case one enclosure (64) with a battery cell,

wherein each recess comprises a first contact surface (31) for electrically connecting a positive pole of a battery cell and a second contact surface (32) for electrically connecting a negative pole of the battery cell to the electrical lines, wherein in each case one of the contact surfaces, preferably the first contact surface, is electrically connected to the electrical lines of the printed circuit board via the safety device, and the safety device comprises a safety instrument (51) for each battery cell for electrical overcurrent protection,

wherein each battery cell in one of said enclosures is electrically connectable to the printed circuit board in a detachable manner via the respective first and second contact surfaces, and

wherein each recess in the printed circuit board is dimensioned such that a battery cell can be enclosed in one of said enclosures in a maximum cross-sectional area of the battery cell.

2. Mounting device (1) according to claim 1, wherein each first and second contact surface (31, 32) is formed in the form of metallic contact spring.

3. Mounting device (1) according to claim 1 or 2, wherein the safety instrument (51) comprises an electrical plug-in fuse and a socket in detachable connection, and

wherein the socket is electrically connected to the lines (34, 35, 36, 37, 38) of the printed circuit board (2) in a non-detachable, in particular non-thermally detachable, manner.

4. Mounting device (1) according to one of the preceding claims, wherein the safety device (51, 52, 53, 54) comprises protective electronics (52), in particular a voltage equalization regulator of a battery management system, for avoiding a deep discharge and overcharging of each battery cell (71) and/or a temperature monitoring (53) for the at least one battery cell with at least one temperature sensor (54).

5. Mounting device (1) according to one of the preceding claims, wherein the safety device (51, 52, 53, 54) is arranged on the printed circuit board (2) in electrical connection with the electrical lines (34, 35, 36, 37, 38).

6. Mounting device (1) according to one of the preceding claims, wherein the electrical lines (34, 35, 36, 37, 38) of the printed circuit board (2) comprise:

control lines (34) for the functional monitoring of the at least one battery cell (71) and for the voltage equalization between the battery cells,

a plurality of first power lines (35) for a series connection of the battery cells,

a plurality of second power lines (36) for a parallel connection of the battery cells,

a first busbar (37) for establishing an electrical connection between the positive pole of at least one battery cell and the consumer, and

a second busbar (38) for establishing an electrical connection between the negative pole of at least one battery cell and the consumer.

7. Mounting device (1) according to claim 6, wherein the first and second power lines (35, 36) are arranged on a first large surface (21) of the printed circuit board (2) and the control lines (34) are arranged on second large surface (22) of the printed circuit board.

8. Mounting device (1) according to claim 6 or 7, wherein the switching elements (41, 42) are provided for opening and closing the electrical connection between at least one battery cell (71) and the first power lines (35) or the second power lines (36) at junction points (33) of the electrical lines of the printed circuit board (2).

9. Mounting device (1) according to claim 8, wherein the switching elements (41, 42) are provided for electrically connecting the battery cells (71) in the series circuit and the parallel circuit,
wherein the switching elements comprise: at least one electromechanical switch, in particular at least one plug-in bridge with a socket, a solder bridge or a relay, and/or at least one electronically controllable switch.

10. Mounting device (1) according to one of the preceding claims 8 or 9, wherein the printed circuit board (2), in each case in electrical connection with the junction points (33), comprises a first connection socket (39) and a second connection socket (310) in electrical connection with the second busbar (38) for providing the electrical energy of the composite battery, in particular of continuous currents up to 35 A, and a third connection socket (311) for functional monitoring of the protective electronics (52) and for voltage balancing.

11. Mounting device (1) according to one of the preceding claims, wherein each contact region (63) in the first and/or the second housing part (61, 62) has an opening (65),

> wherein the first housing part at least partially encloses the printed circuit board (2) with the battery cells on a first large surface (21) of the printed circuit board,
> wherein the second housing part at least partially encloses the printed circuit board with the battery cells on the second large surface (22) of the printed circuit board,
> wherein the second housing part is fixedly or detachably connected to the printed circuit board, and
> wherein the first housing part is detachably connected to the second housing part and/or to the printed circuit board.

12. Mounting device (1) according to one of the preceding claims, wherein the first and the second housing part (61, 62) each have a circumferential edge region (66) on the side facing away from the printed circuit board (2), which edge region (66), at its height, projects beyond the battery cells (71) to be received by the mounting device and is formed in each case with a plurality of edge region a openings (67), and

> wherein the first and/or second housing part comprises, on the side facing the printed circuit board, a venting device (68) for controlled pressure reduction in the event of a thermal destruction of a battery cell received by the mounting device,
> wherein the venting device is designed as a tubular cavity with at least one inlet (69) on an inner side of the housing (61, 62) facing the printed circuit board and with at least one outlet (610) on an outer side of the housing facing away from the printed circuit board.

13. Mounting device (1) according to one of the preceding claims 11 or 12, wherein the housing (61, 62) has the first, second and third connection sockets (39, 310, 311) and first and second fastening elements (611, 612), in particular in the form of bores and blind bores, for fastening the mounting device.

14. Composite battery (7) for providing electrical energy for a consumer, comprising at least one battery cell (71), preferably at least one round cell of an accumulator, particularly preferably at least one lithium ion round cell, having electrical contacts (72) for removing the stored electrical energy, **characterized in that,**
a mounting device (1) for providing different voltages and currents for a consumer from the at least one battery cell (71) according to one of claims 1 to 13 is provided.

15. Battery pack (8) for providing electrical energy for a consumer, **characterized in that** a plurality of composite batteries (7) according to claim 14 are provided for providing the electrical energy for the consumer,

> wherein the plurality of composite batteries are mechanically fastened to one another via first fastening elements (611) provided in each composite battery, in particular in the form of bores, and first connecting elements (81), in particular in the form of threaded rods, and are held detachably in vertically or horizontally stacked arrangement by second fastening elements (612) provided in each composite battery, in particular in the form of blind bores, via second connecting elements (82), in particular in the form of pins,
> wherein the battery pack can be fastened in a force-fitting manner via the first fastening elements and the first connecting elements,
> wherein the plurality of composite batteries is electrically connected to one another via first and second connection sockets (39, 310) provided in each composite battery via junction elements (83) in series connection or parallel connection, wherein one of the first and second connection sockets of the plurality of composite batteries is provided for providing the electrical energy of the battery pack for the consumer, and
> wherein each third connection socket (311) provided in each of the plurality of composite batteries can be connected for function monitoring and for voltage equalization via a line element (84).

**Revendications**

1. Dispositif de montage (1) pour une batterie composite (7) pour fournir différentes tensions et courants pour un consommateur à partir d'au moins une cellule de batterie (71), en particulier d'au moins une cellule ronde d'un accumulateur, avec des contacts électriques (72) pour le prélèvement de l'énergie électrique stockée, le dispositif de montage (1) comprenant une platine (2) avec des lignes électriques (34, 35, 36, 37, 38) et des éléments de commutation (41, 42) pour la connexion électrique d'au moins une cellule de batterie avec le consommateur et un dispositif de sécurité (51, 52, 53, 54) pour la surveillance du fonctionnement d'au moins une cellule de batterie, **caractérisé en ce que**

   un boîtier (61, 62) est prévu pour recevoir une pluralité de cellules de batterie avec une première partie de boîtier (61) et une deuxième partie de boîtier (62),

      dans lequel chaque première et deuxième partie de boîtier présentant une pluralité de régions de contact (63),
      dans lequel chaque cellule de batterie pouvant être fixée entre au moins une région de contact de chacune de la première et la deuxième partie de boîtier, dans lequel chaque région de contact dans la première et/ou la deuxième partie de boîtier étant conçue sous la forme d'une enceinte (64) pour recevoir dans chaque cas une cellule de batterie et
      dans lequel chaque enceinte est conçue pour entourer au moins partiellement une cellule de batterie pouvant y être logé;

   la platine présente une pluralité d'évidements (23) pour recevoir dans chaque cas une enceinte (64) avec une cellule de batterie,

      dans lequel chaque évidement présentant une première surface de contact (31) pour la connexion électrique d'un pôle positif d'une cellule de batterie et une deuxième surface de contact (32) pour la connexion électrique d'un pôle négatif de la cellule de batterie avec les lignes électriques,
      dans lequel l'une des surfaces de contact, de préférence la première surface de contact, étant reliée électriquement aux lignes de la platine par l'intermédiaire du dispositif de sécurité, et le dispositif de sécurité comprend un instrument de sécurité (51) pour chaque cellule de batterie pour la protection électrique contre les surintensités,
      dans lequel chaque cellule de batterie pouvant être reliée électriquement de manière amovible à la platine dans une enceinte par l'intermédiaire de la première et de la deuxième surface de contact respective et
      dans lequel chaque évidement dans la platine étant dimensionné de telle sorte qu'une cellule de batterie dans une enceinte puisse être entouré dans sa surface de section transversale maximale.

2. Dispositif de montage (1) selon la revendication 1, dans lequel chaque première et deuxième surface de contact (31, 32) est réalisée sous la forme d'un ressort de contact métallique.

3. Dispositif de montage (1) selon la revendication 1 ou 2, dans lequel l'instrument de sécurité (51) comprend un fusible électrique enfichable et une douille en connexion amovible et
   dans lequel la douille étant électriquement connectée aux lignes (34, 35, 36, 37, 38) de la platine (2) d'une manière non détachable, en particulier non thermiquement détachable.

4. Dispositif de montage (1) selon l'une des revendications précédentes, dans lequel le dispositif de sécurité (51, 52, 53, 54) comprend une électronique de protection (52), en particulier un régulateur de compensation de tension d'un système de gestion de batterie, pour éviter une décharge profonde et une surcharge de chaque cellule de batterie (71) et/ou un contrôle de température (53) pour la au moins une cellule de batterie avec au moins un capteur de température (54).

5. Dispositif de montage (1) selon l'une des revendications précédentes, dans lequel le dispositif de sécurité (51, 52, 53, 54) est disposé sur la platine (2) en connexion électrique avec les lignes électriques (34, 35, 36, 37, 38).

6. Dispositif de montage (1) selon l'une des revendications précédentes, dans lequel les lignes électriques (34, 35, 36, 37, 38) de la platine (2) comprenant:

des lignes de commande (34) pour la surveillance du fonctionnement d'au moins une cellule de batterie (71) et pour l'équilibrage de la tension entre les cellules de batterie,
une pluralité de premières lignes de puissance (35) pour une connexion en série des cellules de batterie,
une pluralité de deuxièmes lignes de puissance (36) pour une connexion en parallèle des cellules de batterie,
une première barre omnibus (37) pour établir une connexion électrique entre le pôle positif d'au moins une cellule de batterie et le consommateur et
une deuxième barre omnibus (38) pour établir une connexion électrique entre le pôle négatif d'au moins une cellule de batterie et le consommateur.

7. Dispositif de montage (1) selon la revendication 6, dans lequel les premières et deuxièmes lignes de puissance (35, 36) sont disposées sur une première grande surface (21) de la platine (2) et les lignes de commande (34) sur une deuxième grande surface (22) de la platine.

8. Dispositif de montage (1) selon la revendication 6 ou 7, dans lequel les éléments de commutation (41, 42) sont prévus d'ouverture et de fermeture de la connexion électrique entre au moins une cellule de batterie (71) et les premières lignes de puissance (35) ou les deuxièmes lignes de puissance (36) aux points de jonction (33) des lignes électriques de la platine (2).

9. Dispositif de montage (1) selon la revendication 8, dans lequel les éléments de commutation (41, 42) sont prévus pour connecter électriquement les cellules de batterie (71) en la connexion en série et la connexion en parallèle, dans lequel les éléments de commutation comprenant: au moins un commutateur électromécanique, en particulier au moins un pont enfichable avec une douille enfichable, un pont de soudure ou un relais, et/ou au moins un commutateur à commande électronique.

10. Dispositif de montage (1) selon l'une des revendications précédentes 8 ou 9, dans lequel la platine (2) comprend, dans chaque cas en connexion électrique avec les points de jonction (33), une première prise de connexion (39) et une deuxième prise de connexion (310) en connexion électrique avec la deuxième barre omnibus (38) pour fournir l'énergie électrique de la batterie composite, en particulier des courants permanents jusqu'à 35 A, et une troisième prise de connexion (311) pour surveiller le fonctionnement de l'électronique de protection (52) et pour équilibrer la tension.

11. Dispositif de montage (1) selon l'une des revendications précédentes, dans lequel chaque région de contact (63) présente une ouverture (65) dans la première et/ou la deuxième partie de boîtier (61, 62),

dans lequel la première partie de boîtier entourant au moins partiellement la platine (2) avec les cellules de batterie sur la première grande surface (21) de la platine,
dans lequel la deuxième partie de boîtier entourant au moins partiellement la platine avec les cellules de batterie sur la deuxième grande surface (22) de la platine,
dans lequel la deuxième partie du boîtier étant reliée de manière fixe ou amovible à la platine et
dans lequel la première partie du boîtier étant reliée de manière amovible à la deuxième partie du boîtier et/ou à la platine.

12. Dispositif de montage (1) selon l'une des revendications précédentes, dans lequel la première et la deuxième partie de boîtier (61, 62) présentent chacune, sur le côté opposé à la platine (2), une région de bord circonférentiel (66) qui dépasse en hauteur les cellules de batterie (71) à recevoir par le dispositif de montage et qui est réalisée dans chaque cas avec une pluralité d'ouvertures de région de bord (67) et dans lequel la première et/ou la deuxième partie de boîtier comprenant, sur le côté tourné vers la platine, un dispositif d'aération (68) pour la réduction contrôlée de la pression en cas de destruction thermique d'une cellule de batterie reçu par le dispositif de montage, dans lequel le dispositif d'aération étant conçu comme une cavité tubulaire avec au moins une entrée (69) sur le côté intérieur du boîtier (61, 62) tourné vers la platine et avec au moins une sortie (610) sur le côté extérieur du boîtier opposé à la platine.

13. Dispositif de montage (1) selon l'une des revendications précédentes 11 ou 12, dans lequel le boîtier (61, 62) comprend la première, deuxième et troisième prise de connexion (39, 310, 311) et premiers et deuxièmes éléments de fixation (611, 612), en particulier sous la forme de trous et de trous borgnes, pour fixer le dispositif de montage.

**14.** Batterie composite (7) pour fournir de l'énergie électrique à un consommateur, comprenant au moins une cellule de batterie (71), en particulier au moins une cellule ronde d'un accumulateur, en particulier de préférence au moins une cellule ronde au lithium-ion, avec des contacts électriques (72) pour le prélèvement de l'énergie électrique stockée, **caractérisé en ce que** un dispositif de montage (1) est prévu pour fournir des tensions et des courants différents à un consommateur à partir de l'au moins une cellule de batterie (71) selon l'une des revendications 1 à 13.

**15.** Bloc-batterie (8) pour fournir de l'énergie électrique à un consommateur, **caractérisé en ce qu'**une pluralité de batteries composites (7) selon la revendication 14 sont prévues pour fournir l'énergie électrique au consommateur,

dans lequel la pluralité de batteries composites étant fixées mécaniquement les unes aux autres de manière amovible par l'intermédiaire des premiers éléments de fixation (611) prévus dans chaque batterie composite, en particulier sous la forme de perçages, et des premiers éléments de connexion (81), en particulier sous la forme de tiges filetées, et étant maintenues de manière amovible dans une disposition empilée verticale ou horizontale par les deuxièmes éléments de fixation (612) prévus dans chaque batterie composite, en particulier sous la forme des alésages borgnes, au moyen des deuxièmes éléments de connexion (82), en particulier sous la forme de broches,
dans lequel le bloc-batterie pouvant être fixé à force par l'intermédiaire des premiers éléments de fixation et des premiers éléments de connexion,
dans lequel la pluralité de batteries composites étant électriquement connectées les unes aux autres par l'intermédiaire de première et seconde prises de connexion (39, 310) disposées dans chaque batterie composite par l'intermédiaire d'éléments de jonction (83) en connexion en série ou en connexion parallèle, dans lequel l'une des premières et deuxièmes prises de connexion de la pluralité de batteries composites étant prévue pour la mise à disposition de l'énergie électrique du bloc-batterie pour le consommateur et
dans lequel chaque troisième prise de connexion (311) disposée dans chacune de la pluralité de batteries composites pouvant être connectée pour une surveillance de fonction et pour une égalisation de tension par l'intermédiaire d'un élément de ligne (84).

FIG. 1

FIG. 2

FIG. 3

(a)                                        (b)

FIG. 4

FIG. 5

Schnitt A-A

FIG. 6

66  67                                    62

65

611        612

**FIG. 7 (a)**

2    68      69      71      610

39

B                                          B

311

310

61                    612    611

**FIG. 7 (b)**

Schnitt B-B                                      7

66    67    64    65    71              62

311

61

52    2

**FIG. 7 (c)**

FIG. 8

FIG. 9

**EP 4 016 716 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080054870 A1
- DE 102018009445 A1
- EP 2416405 A1
- EP 2535789 A1